(19) Europäisches Patentamt
European Patent Office
Office européen des brevets

(11) **EP 2 445 194 B1**

(12) **EUROPEAN PATENT SPECIFICATION**

(45) Date of publication and mention
of the grant of the patent:
**03.12.2014 Bulletin 2014/49**

(51) Int Cl.:
**H04N 5/232** (2006.01)

(21) Application number: **11186545.7**

(22) Date of filing: **25.10.2011**

(54) **Imaging device and imaging method**

Abbildungsvorrichtung und Abbildungsverfahren

Dispositif et procédé d'imagerie

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.10.2010 JP 2010238323**

(43) Date of publication of application:
**25.04.2012 Bulletin 2012/17**

(73) Proprietor: **Ricoh Company, Ltd.
Ohta-ku, Tokyo 143-8555 (JP)**

(72) Inventor: **Itoh, Kei
Tokyo 143-8555 (JP)**

(74) Representative: **Leeming, John Gerard
J A Kemp
14 South Square
Gray's Inn
London WC1R 5JJ (GB)**

(56) References cited:
**EP-A1- 1 855 135         EP-A2- 0 341 695
EP-A2- 1 341 022         US-A1- 2004 130 648
US-A1- 2007 110 425**

**Description**

Technical Field

The present invention relates to an imaging device having an autofocus function and an imaging method.

Description of the Related Art

An imaging device such as a general digital still camera includes an autofocus device (hereinafter, referred to as AF) which automatically focuses on a subject. As one example of an AF control method for use in the AF device, a climbing AF control method is known. This climbing AF control method uses a value in which a brightness difference between adjacent pixels of respective pixels constituting picture signals output from an imaging element is integrated as an AF evaluation value indicating a focusing state. A counter portion of a subject in picture signals is clear in a focused state. Accordingly, the brightness difference between adjacent pixels constituting picture signals is large in a focused state. Namely, the AF evaluation value is increased in a focused state. On the contrary, the counter portion of the subject in the picture signals is unclear in a non-focused state, so that the brightness difference between adjacent pixels in the picture signals is decreased. Namely, the AF evaluation value is decreased in the non-focused state.

The AF device obtains image data in a lens position at a predetermined timing or at predetermined time intervals while moving a lens, so as to calculate the AF evaluation value. By evaluating the maximum value of the calculated AF evaluation values (the peak position of the AF evaluation values), the focused position is determined. Namely, the lens is stopped in a position where the maximum AF evaluation value is obtained, so that a subject can be automatically focused. The climbing AF control method can automatically focus on a subject by detecting the peak position of the AF evaluation values.

In the conventionally known climbing AF control method, a lens is moved over the entire moving area of a lens, the lens position where the maximum AF evaluation value is obtained during that time is evaluated, and the lens is automatically moved to that lens position. More specifically, the starting position of the AF operation is set as the central position of the lens moving area, the lens is at first moved to that position, and then, the lens is moved in the predetermined direction (for example, in the direction of the closest focused position). After that, the lens is reversely moved in the direction of the infinity focused position. The lens position where the maximum AF evaluation value is obtained during this time is evaluated. However, in this conventional AF control method, it takes a lot of time for the AF operation because a lens moving distance is large, resulting in the missing of a photo-opportunity.

Recently, the climbing AF control method has been developed, and a more accurate high speed AF control method is proposed, for example, in Patent Document 2 (Japanese Patent Publication No. 3851027). The AF control method described in Patent Document 2 uses a first mode which samples (obtains) an AF evaluation value at minute intervals and a second mode which samples an AF evaluation value at rough intervals until approaching a focused position and samples an AF evaluation value at minute intervals near the focused position. According to this method, the speed of the AF process is increased, and a subject can be focused more quickly. However, in the AF control method described in Patent Document 2, the AF control is performed twice, namely, the first mode and the second mode. For this reason, in such an AF control method, the speed of the focusing operation can not be sufficiently increased; thus, further speeding-up is desired.

Consequently, a focus adjuster described in Patent Document 3 (Japanese Patent Application Publication No. 2008-058559) is proposed. This focus adjuster is configured, in the readjustment of a focal point after being focused, to compare an image recorded in a previous focused position with the present image, and to narrow a focusing search area (an area for obtaining an AF evaluation value) when the comparison result is within a predetermined range. The focus adjuster described in Patent Document 3 requires that a subject is once focused and the focused image is stored. Accordingly, the focus adjuster does not follow the time passage and the change in the subject. Namely, the feature of the focus adjuster described in Patent Document 3 can not be utilized if the subject is changed with time, so that the practical effect of the focus adjuster described in Patent Document 3 can not be expected.

In addition to the above-described problems, conventional automatic focus adjusters (AF device) including those described in Patent Documents 1-3 have the following problem. For example, with a heavy lens, the stopping accuracy in a focused position is deteriorated, and it takes a time for moving a lens because the movement of the lens by a driving pulse is deteriorated. Specifically, with a lens in which the amount of backlash is large, or with a lens having a wide driving area such as a macro-photographable lens, the above problem is prominent.

As an actual AF focusing driving, a focus lens is firstly moved to the start position, and the peak is detected by obtaining the AF evaluation values while conducting focus driving. Consequently, unnecessary lens movement and AF evaluation value calculation are conducted in a non-focused position. For this reason, it takes time to evaluate low contrast, resulting in the decrease in the AF speed and the accuracy.

US 2004/0130648 A1 discloses an electronic camera. When the shutter button is half depressed, a focal level of an object is determined on the basis of an image signal output from an imaging device and a moving start position of a focus lens is determined on the basis of that result.

In view of the above-circumferences, there has been desired a technique which smoothly moves a lens to a focused position from anywhere in a moving area by estimating a focused position of a subject.

It is, therefore, an object of the present invention to provide an imaging device and an imaging method which can perform a high speed AF operation by detecting a focus position while moving an imaging lens to a focus detection operation start position in an AF operation.

Another object of the present invention is to provide an imaging device and an imaging method which can perform an AF process at high speed by changing a movement speed of a lens according to various shooting conditions.

In order to achieve the above objects, one embodiment of the present invention provides an imaging device as defined in the appended claims.

One embodiment of the present invention also provides an imaging method as defined in the appended claims.

The accompanying drawings are included to provide further understanding of the invention, and are incorporated in and constitute a part of this specification. The drawings illustrate an embodiment of the invention and, together with the specification, serve to explain the principle of the invention.

FIG. 1 is a front view illustrating an example of a camera as an imaging device according to an embodiment of the present invention.

FIG. 2 is a top view of the camera.

FIG. 3 is a back view of the camera.

FIG. 4 is a block diagram illustrating an example of an electric control system of the imaging device.

FIG. 5 is a view illustrating a general AF frame displayed on a display element of the imaging device.

FIG. 6 is a flow chart illustrating an operation in a finder mode process of the imaging device in one embodiment of the present invention.

FIG. 7 is a flow chart illustrating an operation of an AF start scanning process in one embodiment of the imaging device.

FIG. 8 is a flow chart illustrating an operation of a focus speed setting process in the above embodiment.

FIG. 9 is a flow chart illustrating an operation of an automatic focus detection start position determination process in the above embodiment.

FIG. 10 is a flow chart illustrating an operation of an AF process in the above embodiment.

FIG. 11A is a graph illustrating an AF evaluation result in LV10.

FIG. 11B is a graph illustrating an AF evaluation result in LV8.

FIG. 12A is a graph illustrating a result in which the AF evaluation values are smoothly differentiated in LV 10.

FIG. 12B is a graph illustrating a result in which the AF evaluation values are smoothly differentiated in LV8.

FIGs. 13A, 13B, 13C are graphs each illustrating AF evaluation values in AF start scanning in the above embodiment; FIG. 13A provides a waveform in peak detection, FIG. 13B provides a waveform in monotone lowering, and FIG. 13C provides a waveform in determination inability.

FIG. 14 is a flow chart illustrating an operation for setting a focus driving speed in the above embodiment.

FIG. 15 is a flow chart illustrating an operation of an AF start scanning process in an imaging device according to another embodiment of the present invention.

FIG. 16 is a flow chart illustrating an operation of an AF area setting process in an imaging device according to another embodiment of the present invention.

FIG. 17A is a waveform illustrating a change in through-up according to a change in a pulse rate for driving a focus lens of an imaging device.

FIG. 17B is a waveform illustrating a change in through-down according to a change in a pulse rate for driving a focus lens of an imaging device.

FIGs. 18A, 18B, 18C are schematic views each illustrating an AF area in another embodiment of an imaging device; FIG. 18A provides a setting example in scanning peak detection, FIG. 18B provides a setting example in monotone lowering, and FIG. 18C provides a setting example in start scanning determination inability.

FIG. 19 is a timing chart illustrating a VD signal when loading image data, timing for driving a lens, pulse timing for discharging an electric pulse of an electronic shutter, and exposure timing.

FIGs. 20A, 20B are block diagrams each illustrating a configuration example of a control program of the imaging device.

DETAILED DESCRIPTION OF THE PREFERRED EMBODIMENT

Hereinafter, an embodiment of an imaging device and an imaging method will be described with reference to the drawings.

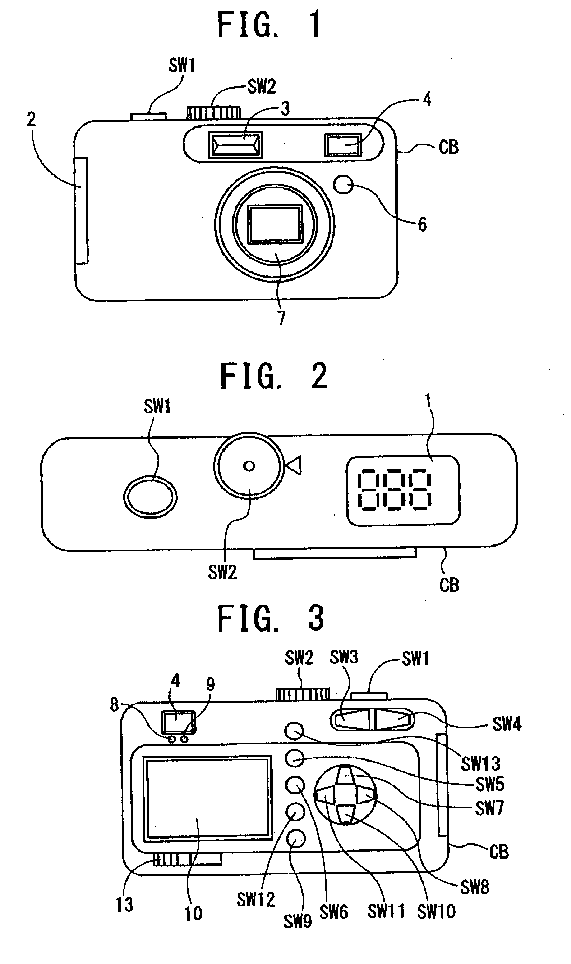

FIGs. 1-3 illustrate examples of external appearances of a digital camera as an example of an imaging device.

FIG. 1 provides a front view, FIG. 2 provides a plan view, and FIG. 3 provides a back view. Referring to FIG. 1, the front face of a camera body CB which is a housing of an imaging device includes a strobe light emitter 3, an object plane of an optical finder 4, a remote control receiver 6, and a lens barrel unit 7 including an imaging lens. A lid 2 for a memory card loading room and a battery loading room is provided in one side face of the camera body CB. Referring to FIG. 2, the top surface of the camera body CB includes a release button (switch) SW1, a mode dial SW2, and a sub-liquid crystal display 1 (sub-LCD) (hereinafter, a liquid crystal display is referred to as an LCD).

Referring to FIG. 3, the back face of the camera body CB includes an eyepiece of an optical finder 4, a light-emitting diode for AF (hereinafter, referred to as an LED) 8, a strobe LED 9, an LCD monitor 10, a power source switch 13, a wide direction zoom switch SW3, a telephoto direction zoom switch SW4, a switch SW5 for setting and releasing a self timer, a menu switch SW6, a switch SW7 for upward movement and strobe setting, a switch SW8 for right movement, a display switch SW9, a macro switch SW10 for down movement, a switch SW11 for left movement and confirming an image, an OK switch SW12, and a quick access switch SW13.

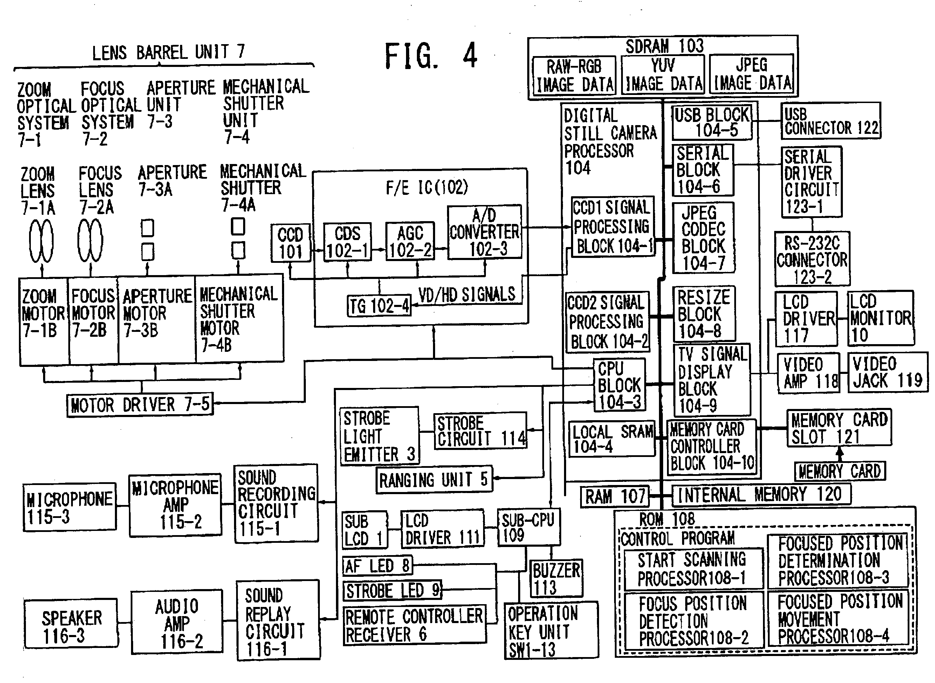

Next, an example of the function block of the imaging device illustrated in FIG. 4 will be described. The various operations (processes) of the imaging device are controlled by a digital still camera processor 104 (hereinafter, referred to as a processor 104) as a digital signal process IC (integrated circuit) or the like. The processor 104 includes a first CCD (charge-coupled device) signal processing block 104-1, a second CCD signal processing block 104-2, a CPU (central processing unit) block 104-3, a local SRAM (SRAM: static random access memory) 104-4, a USB (universal serial buss) block 104-5, a serial block 104-6, a JPEG CODEC block 104-7, a RESIZE block 104-8, a TV signal display block 104-9, and a memory card controller block 104-10. These blocks are connected to each other via a bus line.

A SDRAM (synchronous random access memory) 103 for storing RAW-RGB image data, YUV image data and JPEG image data, a RAM 107, an internal memory 120 and a ROM 108 in which a control program is stored are provided outside the processor 104. These are connected to the processor 104 via a bus line.

The lens barrel unit 7 includes a zoom optical system 7-1 having a zoom lens 7-1a, a focus optical system 7-2 having a focus lens 7-2a, an aperture stop unit 7-3 having an aperture stop 7-3a, and a mechanical shutter unit 7-4 having a mechanical shutter 7-4a. The zoom optical system 7-1, the focus optical system 7-2, the aperture stop unit 7-3 and the mechanical shutter unit 7-4 are driven by a zoom motor 7-1b a focus motor 7-2b as a focus lens driver, an aperture stop motor 7-3b, and a mechanical shutter 7-4b, respectively. The zoom motor 7-1b, the focus motor 7-2b, the aperture stop motor 7-3b, and the mechanical shutter motor 7-4b are driven by a motor driver 7-5. The operation of the motor driver 7-5 is controlled by the CPU block 104-3 of the processor 104.

The zoom lens 7-1a and the focus lens 7-2a of the lens barrel unit 7 constitute an imaging lens which images a subject optical image on an imaging face of the CCD 101 as an imaging element. The CCD 101 converts the subject optical image into electric image signals, and inputs the image signals into an F/E-IC (front end IC) 102.

The F/E-IC 102 includes a CDS (correlation double sampling portion) 102-1, an AGC (automatic gain control portion) 102-2, and an A/D (analogue-digital) convertor 102-3, converts the image signals into digital signals by performing a predetermined process on the image signals, and inputs the digital signals into the first CCD signal processing block 104-1. These signal processing operations are controlled through a TG (timing generator) 102-4 by the VD signal (vertical driving signal) and the HD signal (horizontal driving signal) output from the first CCD signal processing block 104-1 of the processor 104. The first CCD signal processing block 104-1 performs signal processes such as white balance adjustment and γ adjustment on the digital image data input from the CCD 101 through the F/E-IC 102, and outputs the VD signal and the HD signal.

The CPU block 104-3 of the processor 104 controls a sound recording operation by a sound recording circuit 115-1. The sound recording circuit 115-1 records sound signals converted by a microphone 115-3 and amplified by a microphone AMP 115-2 according to the command of the CPU block 104-3.

The CPU block 104-3 controls the operation of a sound playback circuit 116-1. The sound playback circuit 116-1 amplifies sound signals appropriately recorded in a memory by an audio AMP 116-2 in accordance with the command of the CPU block 104-3, inputs the amplified signals to a speaker 116-3 and reproduces the sound from the speaker 116-3.

The CPU block 104-3 controls the strobe circuit such that the strobe light emitter 3b emits the illumination light. The CPU block 104-3 controls the operation of a ranging unit 5 which measures a subject distance.

Since the imaging device is used to perform AF control based on image data, it is not always necessary to measure a subject distance by the ranging unit 5; thus, the ranging unit 5 can be omitted. By providing the ranging unit 5, the measurement information of the subject distance may be used for strobe light emitting control in the strobe circuit 114. The measurement information of the subject distance by the ranging unit 5 may be supplementarily used for the focusing control based on the image data.

The CPU block 104-3 is connected to a sub-CPU 109 disposed outside the processor 104, and the sub-CPU 109 controls the display of the sub-LCD 109 via an LCD driver 111. The sub-CPU 109 is connected to the LED for AF 8, the strobe LED 9, the remote control receiver 6, the operation portion including the above switches SW1-SW13, and a buzzer 113.

The USB block 104-5 is connected to a USB connector 122. The serial block 104-6 is connected to an RS-232C connector 123-2 via a serial driver circuit 123-1.

The TV signal display block 104-9 is connected to the LCD monitor 10 via the LCD driver 117. The TV signal display block 104-9 is connected to a video jack 119 via a video AMP 118.

The memory card controller block 104-10 is connected to the card contact point of a memory card slot 121. If a memory card is loaded in the memory card slot 121, the memory card has contact with the contact point of the memory card slot 121 to be electrically connected, and an image file is stored in the loaded memory card.

Next, the operation of the above-described imaging device will be described. By setting the mode dial SW2 illustrated in FIGs. 1-3 in a recording mode, the imaging device is activated in the recording mode. If the CPU block 104-3 detects via the sub-CPU 109 that the mode dial SW2 in the operation key unit (SW1-SW13) in FIG. 4 is switched to the recording mode, the recording mode is set by the mode dial SW2. The CPU block 104-3 controls the motor driver 7-5, and moves the lens barrel unit 7 to an imageable position. The CCD 101, the F/E-IC 102, the LCD monitor 10 and the like are turned on to start their operations. Upon the turning-on of these, the operation of the finder mode is started.

In the finder mode, a subject image is formed on the light-receiving face of the CCD 101 by the light from the subject incident on the CCD 101 of an imaging element via the imaging lens of the lens barrel unit 7. The subject image is converted into electric signals, input to the CDS 102-1 as RGB analogue signals, and sent to the A/D convertor 102-3 via the AGC 102-2. Each signal of R, G, B converted into a digital signal in the A/D convertor 102-3 is converted into YUV image data in a YUV convertor provided in the second CCD signal processing block 104-2 in the processor 104 so as to be recorded in the SDRAM 103 as a frame memory. In addition, the second CCD signal process block 104-2 converts the RGB image data into the YUV image data by applying an appropriate process such as a filtering process to the RGB image data. This YUV image data is read by the CPU block 104-3, and is sent to a TV via the TV signal display block 104-9, the video AMP 118 and the video jack 119, or sent to the LCD monitor 10 to be displayed via the LCD driver 117. This process is conducted at 1/30 second intervals to become a display in the finder mode, which is updated every 1/30 second.

If the release button SW1 of the operation portion is pressed, an AF evaluation value indicating a focused condition at least in a predetermined portion in a screen and an AE evaluation value indicating an exposure condition are calculated from the digital RGB image data loaded in the first CCD signal processing block 104-1. The AF evaluation value is read by the CPU block 104-3 as characteristic data, and is used for the AF process by the automatic focusing detector.

The high-frequency component of the space frequency included in the image data becomes the highest because the edge portion of the subject in a focused state is clear. The AF evaluation value calculated by using the image data of the subject becomes a value which reflects the height of the high-frequency component as a differential value relative to displacement, for example, so that the position of the focus lens 7-2a obtaining the image data in which the AF evaluation value becomes the maximum value becomes a focused position. Namely, the focused position can be determined by determining the peak position of the AF evaluation values.

Moreover, it may be necessary to consider a plurality of maximum AF evaluation values. When a plurality of maximum AF evaluation values is obtained, an AF process which uses the most reliable maximum point as a focused position is performed after considering the magnitude of the AF evaluation value in the peak position, the shift direction (lowering or rising) of the AF evaluation value in the peripheral position, the amount of shift, or the like.

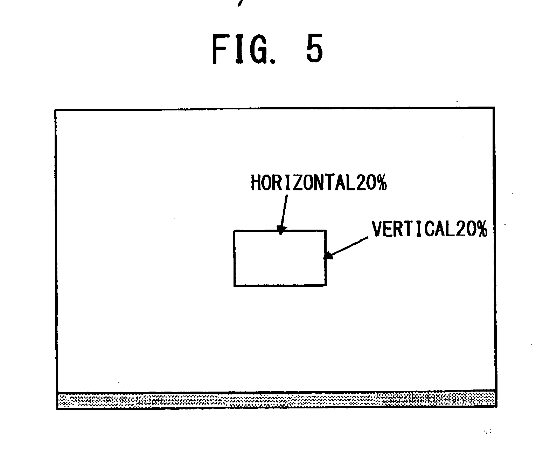

The AF evaluation value can be calculated from a specific area (hereinafter, referred to as an AF process area or an area) in digital RGB image data. FIG. 5 illustrates an example of an image screen displayed on the LCD monitor 10 in the finder mode. In FIG. 5, the area displayed in the central portion of the LCD monitor 10 is an AF process area in the imaging device. The AF process area in the example illustrated in FIG. 5 is previously set as an area in which a rectangular area surrounded by a size of 20% of the horizontal direction and 20% of the vertical direction in the screen of the RGB image data is disposed in the center of the screen.

Next, the relationship between the movement timing of the focus lens 7-2a and the obtaining timing of the AF evaluation value in the AF process will be described. In the present embodiment, an example in which a pulse motor is used as a driver for moving the focus lens 7-2a, namely, an example in which the focus motor 7-2b is a pulse motor will be described. In addition, a DC motor can be used for the focus motor 7-2b instead of using a pulse motor. In this case, the DC motor is driven by a set voltage.

The focus lens 7-2a is moved at a predetermined pulse rate which is asynchronous with the VD signal pulse timing. Thus, the displacement by the pulse during the VD period is not constant, and the position of the focus lens 7-2a is always stored in the SDRAM 103 in a falling position of each VD signal. The position of the focus lens 7-2a is thereby recorded with respect to each falling of the VD signal, and it can be confirmed which AF evaluation value is calculated and where the AF evaluation value is calculated in the focus lens 7-2a even if the pulse rate is changed during the movement of the focus lens 7-2a.

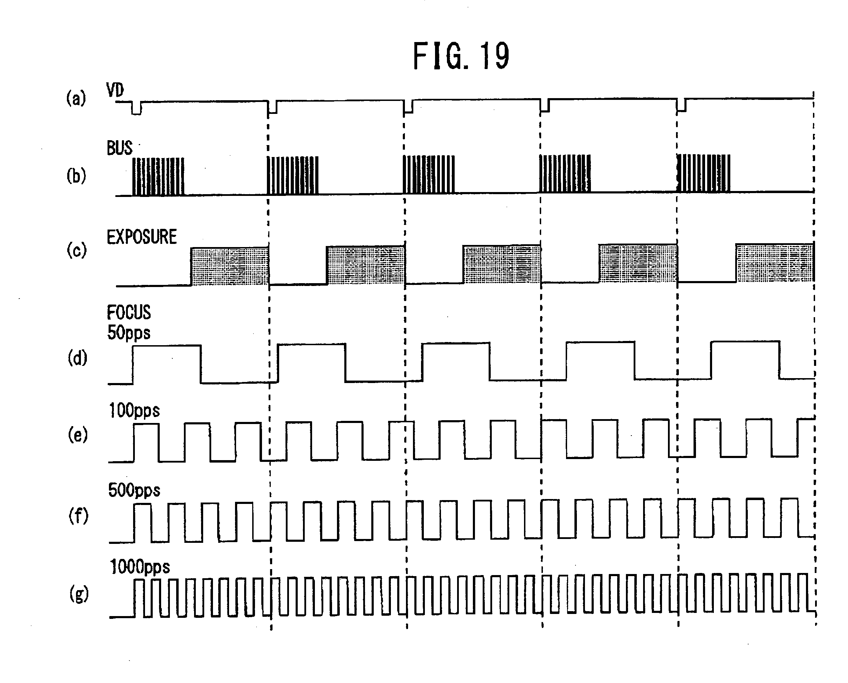

FIG. 19 provides a timing chart example illustrating the relationship between the movement timing of the focus lens 7-2a and the obtaining timing of the AF evaluation value in the AF process. In FIG. 19, (a) illustrates the VD signal when loading image data at a certain frame rate, (d)-(g) illustrates the movement timing of the focus lens 7-2a, (b) illustrates the timing of the charge discharging pulse in an electronic shutter, and (c) illustrates the exposure timing.

In FIG. 19, upon the generation of the first VD signal (a), with the VD signal as trigger, the focus lens 7-2a is driven according to the set pulse rate, and the focus lens 7-2a is moved (d). With the VD signal (a) as trigger, the predetermined number of charge discharging pulses (b) is generated, and the discharging process of the charge in the CCD 101 is conducted according to the number of charge discharging pulses (b). After the charge discharging process is completed, the exposure process (c) is conducted. By the exposure process (c), the picture of the subject is loaded as image data via the imaging lens. The AF evaluation value is calculated by a predetermined calculation using the loaded image data.

The pulse rates (d-g) vary according to the focal length, the extending amount of the focus lens (focus driving range) or the like. In the four pulse rates illustrated in FIG. 19, for example, (d) illustrates an example of 50 pps, (e) illustrates an example of 100 pps, (f) illustrates an example of 500 pps, and (g) illustrates an example of 1000 pps. The exact changes of the pulse rates slightly differ from the changes illustrated in FIG. 19 because of the acceleration in the initial velocity. When the low pulse rate is used as illustrated in (d) of FIG. 19, the amount of pulses which are generated during the VD period (during the interval between the falling of the VD signal) is reduced, so that the AF process in this condition becomes fine adjustment. On the other hand, when the high pulse rate is used as illustrated in (g) of FIG. 19, the amount of pulses which are generated during the VD period is increased, so that the AF process in this condition becomes rough adjustment.

The embodiment of the AF process described above is an example which is performed by a characteristic control program of the imaging device. The program which performs this AF process is stored in the ROM 108 that the imaging device illustrated in FIG. 4 has.

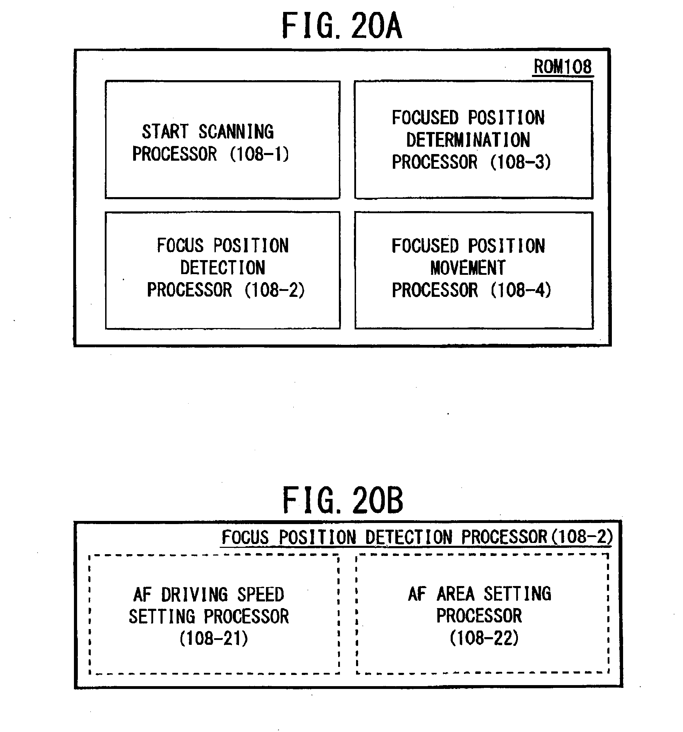

An example of the control program stored in the ROM 108 will be described. FIGs. 20A, 20B are views each illustrating an operation block diagram illustrating an example of a control program stored in the ROM 108, i.e., an AF process program which performs an imaging method by using the mechanism of the imaging device. As illustrated in FIG. 20A, the AF process program includes a start scanning processor (108-1), a focus position detection processor (108-2), a focused position determination processor (108-3), and a focused position movement processor (108-4).

The focus position detection processor (108-2) includes an AF driving speed setting processor (108-21) and an AF area setting processor (108-22) as illustrated in FIG. 20B.

The start scanning processor (108-1) has a processing function which confirms a condition of a subject by using the AF evaluation value sequentially calculated when moving the focus lens 7-2a in the start position for performing the next function in the focus position detection processor (108-2), and changes the start position based on the condition of the subject image.

The focus position detection processor (108-2) has a processing function which evaluates a peak position by calculating the AF evaluation value while moving the focal lens 7-2a from the start position determined in the above-described start scanning processor (108-1), and conducting the after-described smooth differential calculation on the calculated AF evaluation value.

The focused position determination processor (108-3) includes a processing function which determines the final focused position from the peak result detected in the focus position detection processor (108-2).

The focused position movement processor (108-4) includes a processing function which drives the focus motor 7-2b for moving the focus lens 7-2a in the position determined in the focused position determination processor (108-3).

The AF driving speed setting processor (108-21) includes a processing function which sets the moving speed of the focus lens 7-2a when calculating the AF evaluation value while moving the focus lens 7-2a from the start position determined in the start scanning processor (108-1).

The AF area setting processor (108-22) includes a processing function which sets the size of the AF area when calculating the AF evaluation value while moving the focus lens 7-2a from the start position determined in the start scanning processor (108-1).

[Embodiment 1]

Next, an embodiment of an imaging device and an imaging method by the imaging device will be described. The imaging method in this embodiment is performed by the above-described start scanning processor (108-1), the focus position detection processor (108-2), a focused position determination processor (108-3), and a focused position movement processor (108-4).

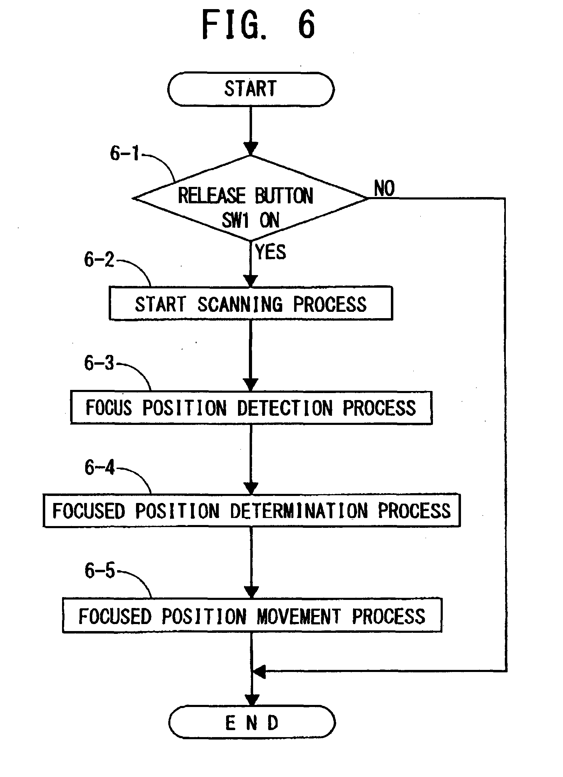

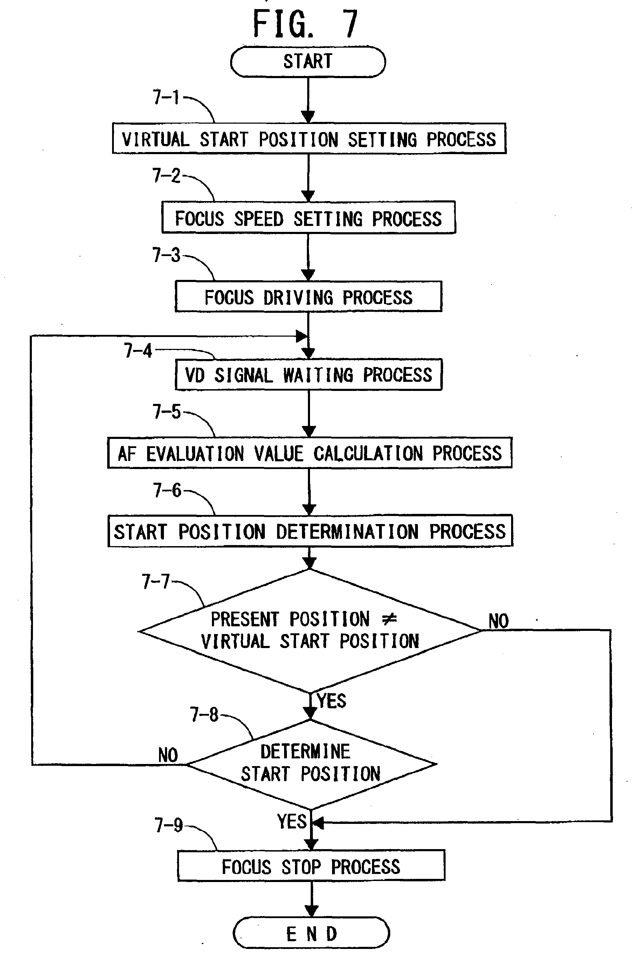

Next, an example of a process flow in the imaging method will be described. FIG. 6 provides a flow chart illustrating an example of an AF process of the imaging method when the release button SW1 is pressed. At first, it is determined whether the release button SW1 is pressed or not (6-1). If the release button SW1 is pressed (YES in 6-1), the start scanning process (6-2) is started. This start scanning process (6-2) is one feature of the present invention; thus, the details thereof will be described with reference to the flow chart of FIG. 7.

Referring to FIG. 7, at first, a virtual start position setting process is performed (7-1). The virtual start position is a virtual position in a previous step which determines the position of the focus lens 7-2a starting the AF process. It is preferable for the movement direction of the focus lens 7-2a in the AF process to be a direction without having the backlash effect or a direction which does not require the removal of the backlash. In this embodiment, since the movement direction is in the direction toward infinity from the close range side, the movement direction of the focus lens 7-2a when performing the AF process is the infinity side direction from the close range side. Namely, it is necessary for the virtual start position to be on a close side. Consequently, in this embodiment, the position of the focus lens 7-2a which focuses on the subject at a close position of 30 cm is set as the virtual start position.

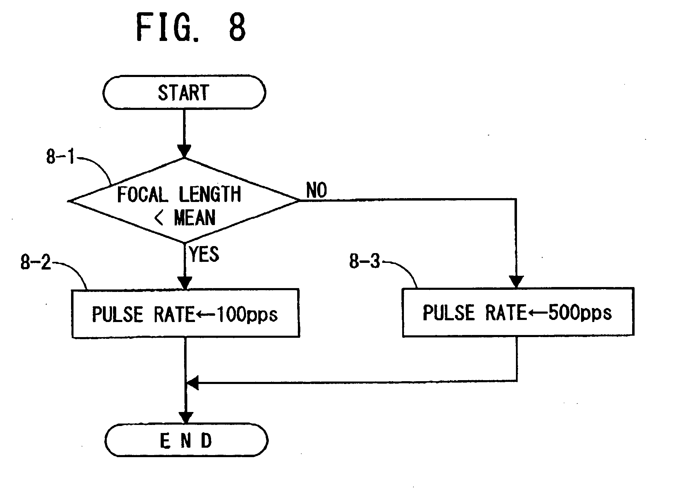

Next, the focus speed setting process is performed (7-2). The focus speed is set according to a time interval which calculates an AF evaluation value required for the start scanning process. Since the frame rate in the finder mode of the imaging device according to the present embodiment is 30 fps, the focus speed when calculating the AF evaluation value at 1/30 sec intervals is set. The details of the focus speed setting process will be described with reference to the flow chart in FIG. 8.

In FIG. 8, the focus speed setting process sets the movement speed (pulse rate) of the focus lens 7-2a according to a focal length. At first, it is determined whether the focal length is under an intermediate (Mean) or not (8-1). In this embodiment, the position of the intermediate (Mean) is set to 80 mm in 35 mm film conversion. If the focal length is under the intermediate (Mean) (Yes in 8-1), the pulse rate is set to 100 pps (8-2). If the focal length is the intermediate (Mean) or over (No in 8-1), the pulse rate is set to 500 pps (8-3). It is desirable for the value of the pulse rate to be variable according to the focus lens position, for example, to be increased if the focus lens position is in the macro side. The above focal length is considered because a lens having a zoom function is assumed. In addition, in a single focus lens barrel unit, the pulse rate can be fixed to 100 pps, for example.

Back to FIG. 7, next, the focus driving process is started (7-3). The focus driving process is a process which moves the focus lens 7-2a by driving the focus motor 7-2b with the set pulse rate in the focus speed setting process (7-2). After starting the focus driving, the operation waits for the VD signal (7-4), and the AF evaluation value is calculated by the image data based on the picture signal obtained with respect to each VD signal (7-5). Accordingly, the focus lens is moved in a predetermined direction in synchronization with the VD signal to enable the correspondence of the AF evaluation value and the focus position. If the focus driving start position is determined as described above, the moving position of the focus lens 7-2a can be specified.

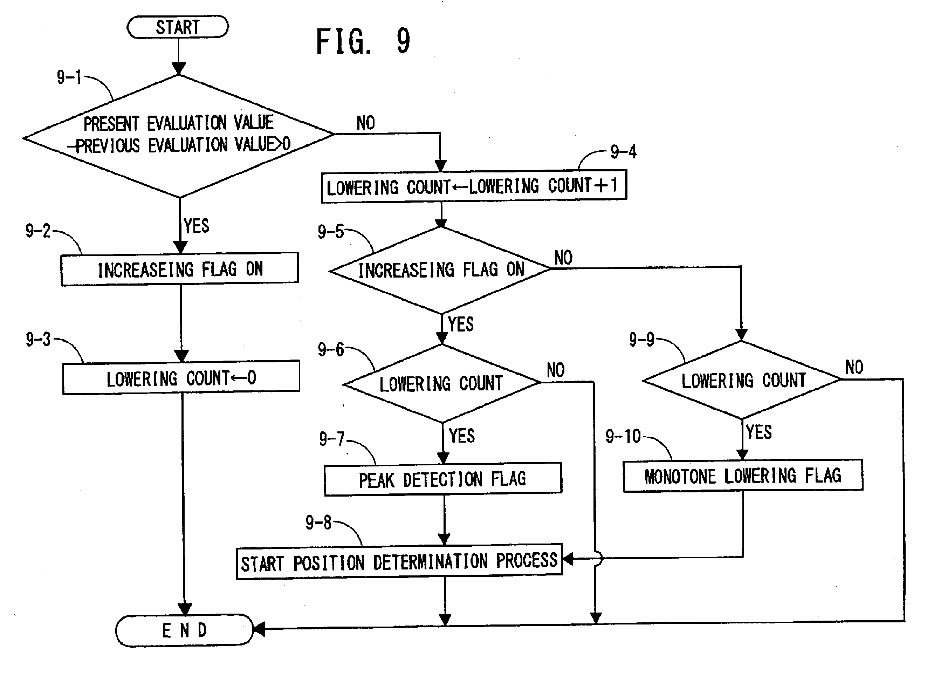

Next, the start position determination process is performed (7-6). The specific example of the start position determination process (7-6) will be described with reference to the flow chart in FIG. 9. At first, the difference between the present AF evaluation value and the previous AF evaluation value is obtained, and it is determined whether it is larger than 0 (9-1). If the difference is larger than 0 (Yes in 9-1), it is determined that the AF evaluation value is increased, and the increasing flag is set to ON (9-2). The lowering count is reset to 0 (9-3), and the start position determination process is completed.

If the difference between the AF evaluation values is 0 or below (No in 9-1), it is determined that the AF evaluation value is lowered, and 1 is added to the lowering count (9-4). Next, it is determined whether the increasing flag is ON or not (9-5). In the case that the increasing flag is ON (Yes in 9-5), namely, the increasing flag is lowered after being increased, if the number of lowering counts is larger than 2 (Yes in 9-6), it is determined that the peak of the AF evaluation values is detected, and the peak detection flag is set to ON (9-7).

If the increasing flag is not ON (No in 9-5), it is determined whether the lowering count is larger than 4 or not (9-9). If the lowering count is larger than 4 (Yes in 9-9), it is determined that the AF evaluation value already passes the peak position, which is in a monotone lowering condition, and the monotone lowering flag is set to ON (9-10). If the increasing flag is not ON (NO in 9-5) and the lowering count is 4 or below (No in 9-9), the process is completed without determining the start position of the focal point detection operation. After setting the peak detection flag to ON (9-7) or setting the monotone lowering flag to ON, the start position determination process of the focal point detection operation is performed (9-8).

The position set in the start position determination process (9-8) of the focal point detection operation is set to a position ahead of the present position by 2 evaluation values when the peak of the AF evaluation values is detected, and is set to a position ahead of the present position by 3 evaluation values in the monotone lowering.

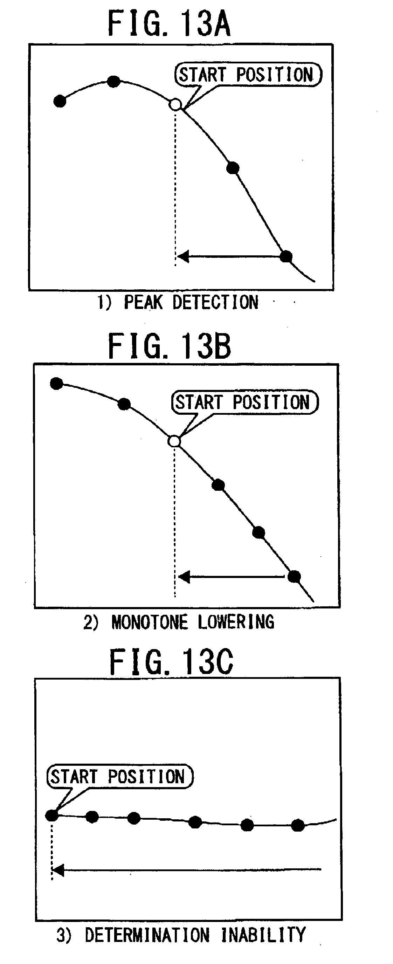

FIGs. 13A, 13B, 13C are views each illustrating the example of the AF evaluation value. In each figure, the lateral direction illustrates the calculation positions of the AF evaluation values, namely, the positions of the focus lens, and the longitudinal direction illustrates the magnitude of the AF evaluation value. More specifically, each of FIGs. 13A, 13B, 13C illustrates the example of the relationship between the lens position and the magnitude of the AF evaluation value.

FIG. 13A provides an example of a change in the AF evaluation value in the peak detection. FIG. 13B provides an example of a change in the AF evaluation value in the monotone lowering. FIG. 13C provides an example of a change in the AF evaluation value when the peak can not be detected and the monotone lowering can not be determined, which is a subject image low contrast environment, for example. In each of FIGs. 13A, 13B, 13C, with respect to the AF evaluation values illustrated by black circles, the position of the lens where the AF evaluation value is calculated illustrated by the white circle is set as the start position.

The start scanning process (6-2 in FIG. 6) is the direction which is not affected by the backlash or the direction which removes the effect of the backlash. Consequently, if the focused position is determined in the start scanning process (6-2 in FIG. 6), a problem regarding the accuracy of the focus detection occurs. Therefore, in the start scanning process, since the start position of the lens movement in the next focus position detection process (6-3 in FIG. 6) is only determined, the focusing can be accurately performed by conducting the AF operation. This is the feature of the present invention.

Back to FIG. 7, after the start position determination process (7-6), it is determined whether the present position reaches the virtual start position or not (7-7). If the present position does not reach the virtual start position (Yes in 7-7), it is determined whether the start position is determined or not (7-8). If the start position is determined (Yes in 7-8), namely, if the peak of the AF evaluation values is detected, or it is determined that the AF evaluation value is monotonically lowered, the focus stop process (7-9) is performed to perform the stop operation, and the process is completed.

If the start position is not determined (No in 7-8), the operation again waits for the VD signal, the AF evaluation value is obtained, and the start position determination process is repeated. In the above step (7-7), if the focus lens 7-2a is moved to the virtual start position (No in 7-7), in the focus stop process (7-9), the position of the focus lens 7-2a where the start scanning process is started is set as the start position (refer to FIG. 13C), and the start scanning process is completed. The above is the start scanning process which is the feature of the present invention.

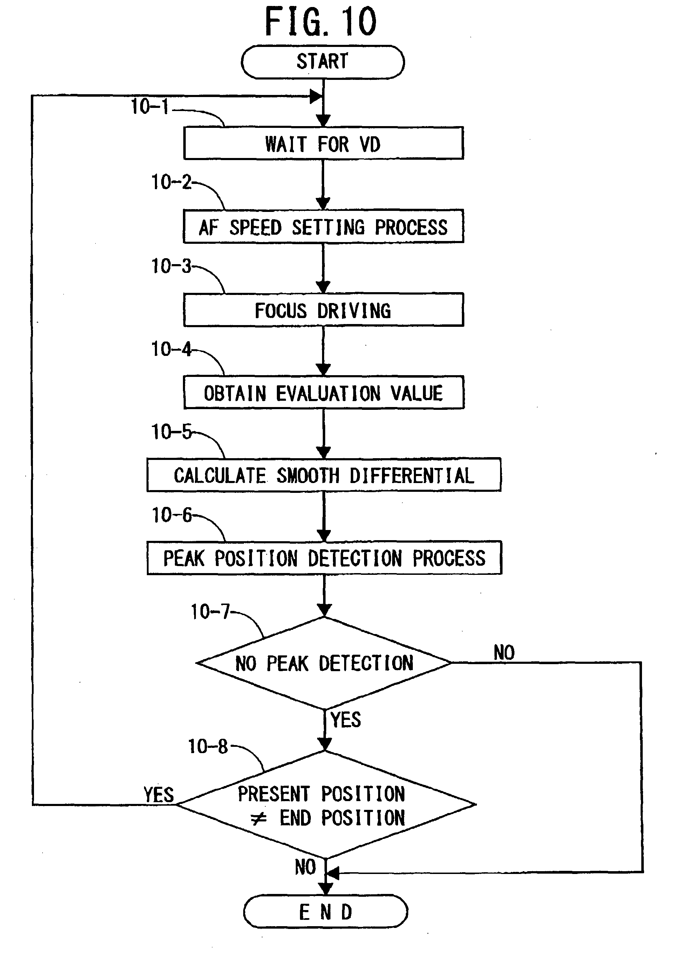

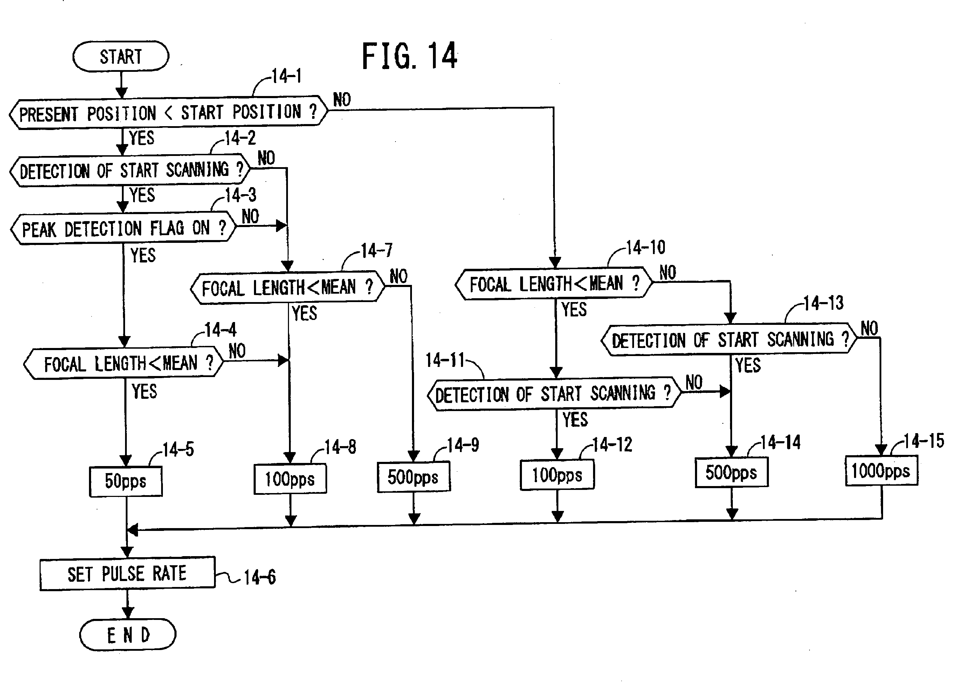

After that, back to FIG. 6, the focus position detection process is conducted (6-3) by the focus position detection processor (108-2 in FIG. 20A). The specific example of the focus position detection process (6-3) is illustrated in FIG. 10. At first, the process waits for the detection of the falling of the VD signal (10-1). After the falling of the VD signal is detected, a predetermined pulse rate is set (10-2) in the AF driving setting processor (FIG. 20B). The details of the focus speed setting process (10-2) will be described with reference to the flow chart in FIG. 14.

At first, it is determined whether the present position of the focus lens 7-2a is the start position or more determined in the above-described start scanning process (6-2) (14-1). In this case, the position of the focus lens 7-2a is indicated by a value which is increased if the position of the focus lens approaches the close side with infinity as 0. That is, it is determined whether or not the present position of the focus lens 7-2a is in the side farther than the determined start position. More specifically, if the present position is in the side farther than the start position (Yes in 14-1), it is confirmed whether or not any detection is found in the start scanning process (6-2). As the confirmation target, it is confirmed whether the peak is detected or not, or the monotone lowering is detected or not.

If the detection of the start scanning is performed (Yes in 14-2), it is confirmed whether the detection result is the peak detection or not (14-3). In the case that it is the peak detection (Yes in 14-3), namely, the peak detection flag is ON in the start scanning process (6-2), if the focal length is shorter than Mean (Yes in 14-4), the pulse rate of the focus lens 7-2a is set to 50 pps (14-5). If the focal length is Mean or more (No in 14-4), the pulse rate of the focus lens 7-2a is set to 100 pps (14-8).

In the case that the start scanning is not detected (No in 14-2) or the detection of the start scanning is performed (Yes in 14-2), if the monotone lowering flag which is not the peak detection flag is ON (No in 14-3) and the focal length is shorter than Mean (Yes in 14-7), the pulse rate of the focus lens 7-2a is set to 100 pps (14-8). If the focal length is longer than Mean (No in 14-7), the pulse rate of the focus lens 7-2a is set to 500 pps (14-9).

Next, in the case that the present position is within the start position, namely, the present position is located in the side closer than the start position (No in 14-1), if the focal length is shorter than Mean (Yes in 14-10), and the detection of the start scanning is performed (Yes in 14-11), the pulse rate of the focus lens 7-2a is set to 100 pps (14-12). If the detection of the start scanning is not performed (No in 14-11), the pulse rate of the focus lens 7-2a is set to 500 pps (14-14).

If the focal length is Mean or more (No in 14-10), and the detection of the start scanning is performed (Yes in 14-13), the pulse rate of the focus lens 7-2a is set to 500 pps (14-14).

If the focal length is Mean or more (No in 14-10), and the detection of the start scanning is not detected (No in 14-13), the pulse rate of the focus lens 7-2a is set to 1000 pps (14-15).

As described above, according to the above-described imaging method, by changing the pulse rate so as to decrease the driving speed to the start position when the result of the start scanning and the focal length is the peak detection and increase the driving speed to the start position when the peak is not detected, the AF speed can be increased because the time to reach the peak position can be improved.

The focus detection after the start position in the AF scanning (in detecting a focal point) is finely adjusted by setting a pulse rate to a low pulse rate when the peak is detected, so that the AF accuracy is improved. In the monotone lowering, the pulse rate is set faster than that, and the driving is conducted to improve the speed and accuracy. Under a low contrast environment, for example, it is determined that there is no peak position in the circumference of that position, and the driving is performed at a pulse rate faster than in the peak detection and the monotone lowering, so as to increase the speed.

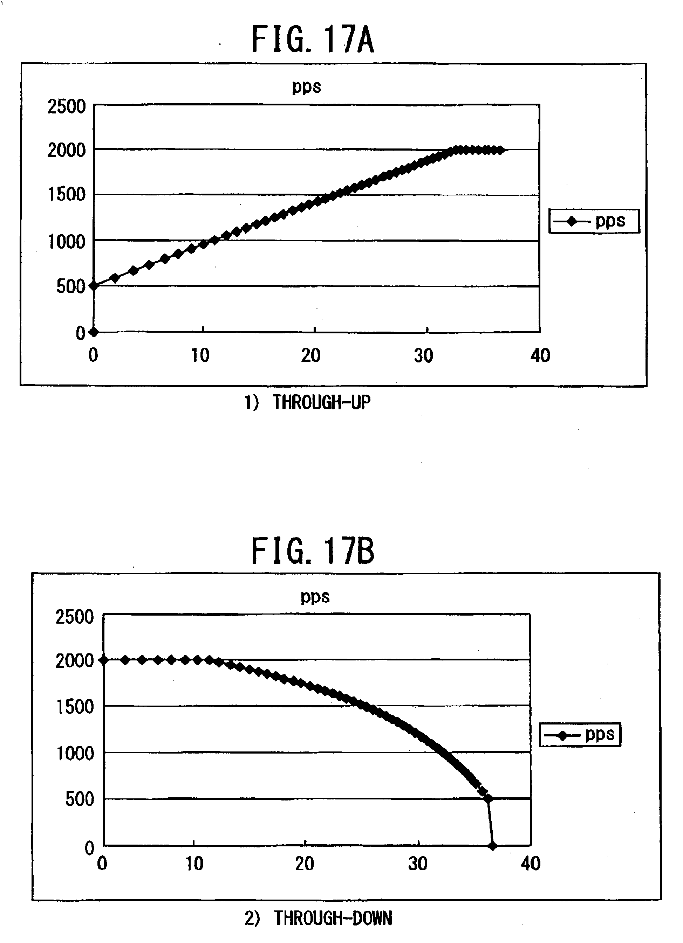

In this case, the degree of the acceleration and deceleration (through-up and through-down) when actually changing the pulse rate of the focus lens 7-2a is important. FIGs. 17A, 17B illustrate the degree of increasing and decreasing of the pulse rate in the through-up and the through-down. As illustrated in FIGs. 17A, 17B, tens of pulse drivings are actually required to achieve the highest speed even if the pulse rate is accelerated to the highest speed (2000 pps in FIGs. 17A, 17B) from a low speed. Similarly, even if the pulse rate is decelerated from the highest speed to a low speed, tens of pulses are actually required to achieve a low speed.

Consequently, when the peak is detected in the start scanning process, after driving to the start position at the highest speed, the peak position may be passed when decreasing to a low speed. Accordingly, this embodiment considers that the decrease degree does not become significant when setting the pulse rate in the focus detection after the start position to a pulse rate lower than the pulse rate of the focus lens 7-2a when moving to the start position.

In the above embodiment, the pulse motor is used for the focus motor 7-2b. However, when a heavy lens which uses a CD motor is used, the measurement for the acceleration and the deceleration becomes specifically important. The imaging device of the present invention can be used for such a heavy lens.

As described above, the feature of the present embodiment is to improve the AF speed and accuracy relative to various subjects by confirming the environment of a subject from the result of the start scanning, and largely increasing in speed by changing the pulse rate according to the environment of the subject or decreasing in speed for improving the accuracy.

Next, back to FIG. 10, the focus motor 7-2b is driven by the pulse rate set in the AF driving speed setting process (10-2), and the focus lens 7-2a is moved (10-3). After moving the focus lens 7-2a, the picture signal is obtained, and the AF evaluation value is obtained by the image data based on the picture signal (10-4). Next, the smooth differential calculation process (10-5) is conducted by this AF evaluation value. In the smooth differential calculation process of the AF evaluation value, where the AF evaluation value obtained based on the image data of the subject loaded at predetermined timing from the moving focus lens 7-2a is X [0], and the AF evaluation value obtained ahead of X [0] by $\alpha$-number is X [-a], and the AF evaluation value obtained behind of X [0] by a-number is X [a], when the weight coefficient relative to each AF evaluation value is set to b1, b2, etc, the smooth differential value Y [0] can be obtained by the following equation 1

(Equation 1)

$$Y[0] = \sum [i=0 \rightarrow a] (X[i] - X[-i]) \times bi$$

The specific example of the above smooth differential calculation is described. When obtaining the smooth differential value Y [0] by using the three evaluation values around the present AF evaluation value (X [0]), Y[0]= (X[-1]-X[1])×1+(X[-2]-X[2])×2+(X[-3]-X[3])×3 In this case, regarding the weight coefficient (bi = 1, 2, 3...), the AF evaluation value (for example, X [1]) close to the present AF evaluation value X [0] is set to a small coefficient and the AF evaluation value (for example, X [3]) far from the present AF evaluation value is set to a large coefficient. That is, if the degree of correlation with the present value (X [0]) is small, a large value is used. In addition, the specific coefficient value is not limited to the above example.

As described above, the extreme value of the AF evaluation value is specified by obtaining the above smooth differential value according to the correlativity of the AF evaluation value obtained in accordance with the movement of the focus lens 7-2a, and the focused position is detected. In the above equation, the smooth differential calculation is conducted by using three AF evaluation values, but the number of AF evaluation values is not limited to three.

Since a plurality of AF evaluation values is required for obtaining the smooth differential value, in the AF evaluation value obtaining timing just after the start of the focus position detection process and just before the driving end range of the focus lens 7-2a, the smooth differential calculation can not be performed. Accordingly, the smooth differential calculation process is conducted after obtaining the number of AF evaluation values which can start the smooth differential calculation after starting the focus position detection process or the smooth differential calculation process is conducted by estimating the AF evaluation value required for the smooth differential calculation with the already obtained AF evaluation value and interpolating the estimated AF evaluation value.

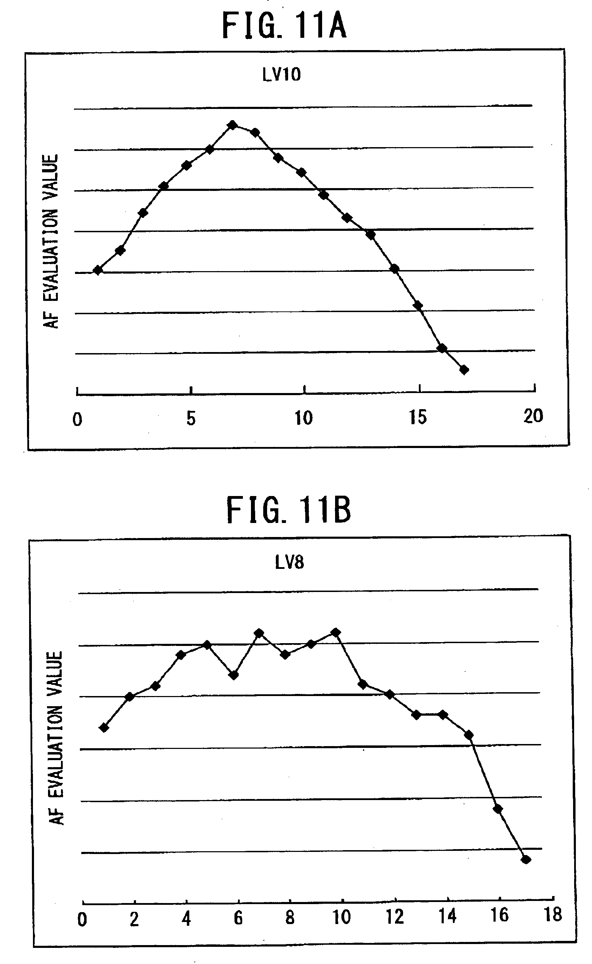

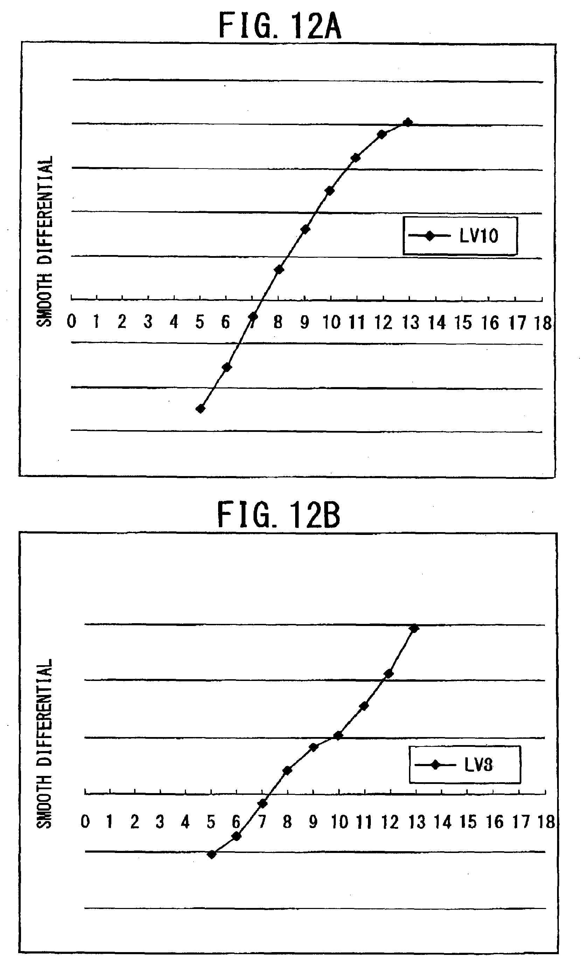

The examples of the AF evaluation value obtained in synchronization with the VD signal and the smooth differential value calculated based on the AF evaluation value in the above focal position detection process are illustrated in FIGs. 11A, 11B, 12A, 12B. FIGs. 11A, 11B are graphs each illustrating the change in the AF evaluation value in the focal position detection process. The vertical axis indicates the magnitude of the AF evaluation value, and the horizontal axis indicates the position of the focus lens 7-2a. In FIG. 11A, the subject brightness is LV10 and in FIG. 11B, the subject brightness is LV8. Namely, FIG. 11B relates to the AF evaluation value obtained under a dark environment compared to the case illustrated in FIG. 11A. Accordingly, in the example illustrated in FIG. 11B, because the brightness difference between adjacent pixels is small, the effect of noise is significant, resulting in the variations in the AF evaluation value, and a plurality of peak positions occurs. If the peak position (extreme value) of AF evaluation value is only one as illustrated in FIG. 11A, that position is set as the focused position. However, if there is a plurality of peak positions as illustrated in FIG. 11B, it can not be simply determined which position is used as the focused position.

FIGs. 12A, 12B are graph each illustrating a smooth differential value of the AF evaluation value illustrated in each of FIGs. 11A, 11B. In FIGs. 12A, 12B, the horizontal axis indicates the position of the focus lens 7-2a similar to FIGs. 11A, 11B, and the vertical axis indicates the magnitude of the smooth differential value. FIG. 12A indicates the smooth differential value based on the change in the AF evaluation value illustrated in FIG. 11A. FIG. 12B indicates the smooth differential value based on the change in the AF evaluation value illustrated in FIG. 11B. As illustrated in FIGs. 12A, 12B, the smooth differential value is not calculated until the predetermined number of AF evaluation values is obtained. The smooth differential value calculated after obtaining the predetermined number of AF evaluation values changes according to the movement of the focus lens 7-2a, and the symbol turns over at a certain point. This point corresponds to the maximum value (peak) of the AF evaluation value. Namely, the position where the symbol of the smooth differential value calculated by the above illustrated equation turns over, i.e., the position where the smooth differential value is zero becomes the maximum point (peak position) of the AF evaluation value. As described above, by specifying the position obtaining the AF evaluation value where the symbol of the smooth differential value turns over, the AF process which moves the focus lens 7-2a in the focused position can be conducted.

Referring to FIG. 10, the peak position detection process (10-6) is conducted by the smooth differential value. This is a process which detects a point where the symbol of the smooth differential value turns over. It is determined whether or not the peak is detected in the peak position detection process (10-7). If the peak is not detected (YES in 10-7), it is determined whether the present position of the focus lens 7-2a reaches the end position or not (10-8). If the position of the focus lens 7-2a does reach the end position (YES in 10-8), the flow goes back to (10-1), and the detection is again conducted. On the other hand, if the present position of the focus lens 7-2a reaches the end position (No in 10-8), the AF process is completed. If the peak is detected in the peak position detection process (NO in 10-7), the focus position detection process is completed.

Back to FIG. 6, after the focus position detection process (6-3), the focused position determination process is conducted (6-4). In this case, when the peak is detected in the focus position detection process, the peak position is determined as the focused position. If the peak is not detected, the NG position is determined as the focused position as AFNG. The NG position is a position of the focus lens 7-2a which focuses on the subject apart about 2.5 m. Finally, the process which moves the focus lens to the focused position is conducted (6-5).

According to the above described Embodiment 1, the AF evaluation value is obtained while moving the shooting lens toward the focus detection operation start position, to confirm the subject condition. Consequently, the AF process can be accurately performed at high speed by changing the pulse rate around the start position in the subsequent focus position detection process. Some lens barrel units have a large driving range, move slowly, and use a DC motor as a driving source. The present invention can be effective for these lens barrels.

[Embodiment 2]

Next, Embodiment 2 of an imaging device and an imaging method using the imaging device will be described. The AF process when the release button SW1 is pressed is the same as that in Embodiment 1. Referring to FIG. 6, the AF process when the release button SW1 is pressed starts from the step (6-1), which confirms whether the release button SW1 is pressed or not. If the release button SW1 is pressed (YES in 6-1), the start scanning process is conducted in the start scanning processor (108-1). Since this start scanning process is already described by using the flow chart in FIG. 7, the description thereof will be omitted.

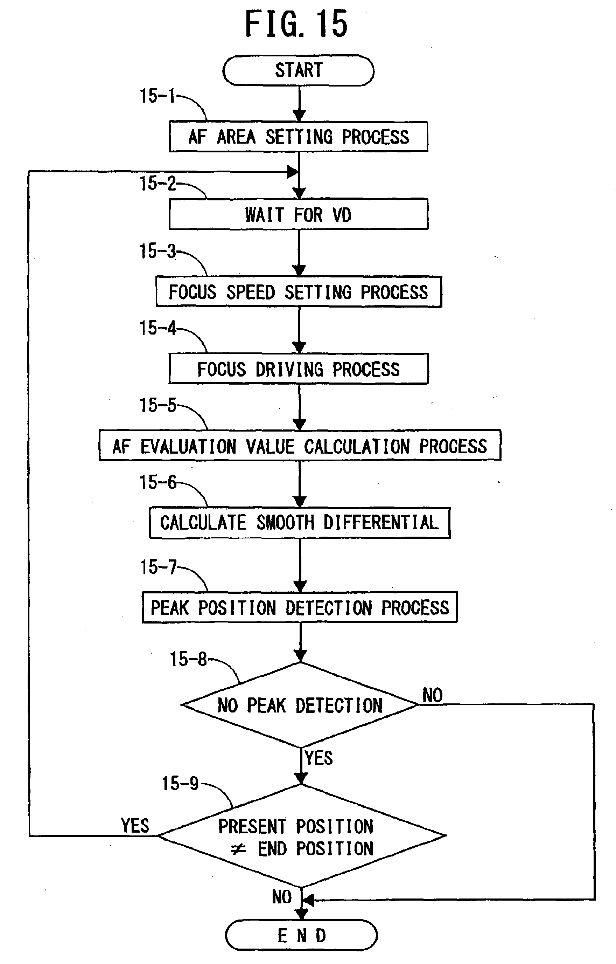

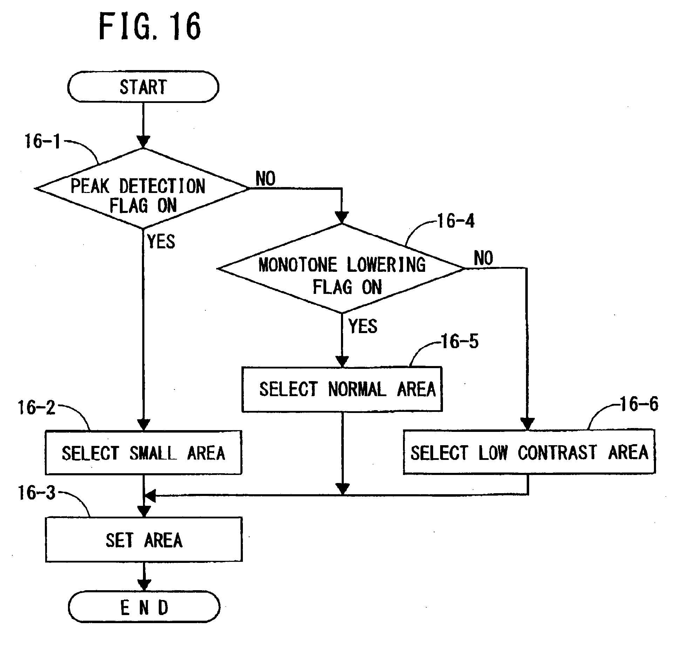

After conducting the above process, the focus position detection process (6-3) is conducted by the focus position detection processor (108-2). This focus position detection process (6-3) is a characteristic process in this embodiment. In this case, the details of the focus position detection process (6-3) according to the present embodiment will be described with reference to FIG. 15. Referring to FIG. 15, the AF area setting process (15-1) is conducted based on the result of the start scanning process (6-2). The details of the AF area setting process will be described with reference to the flow chart in FIG. 16.

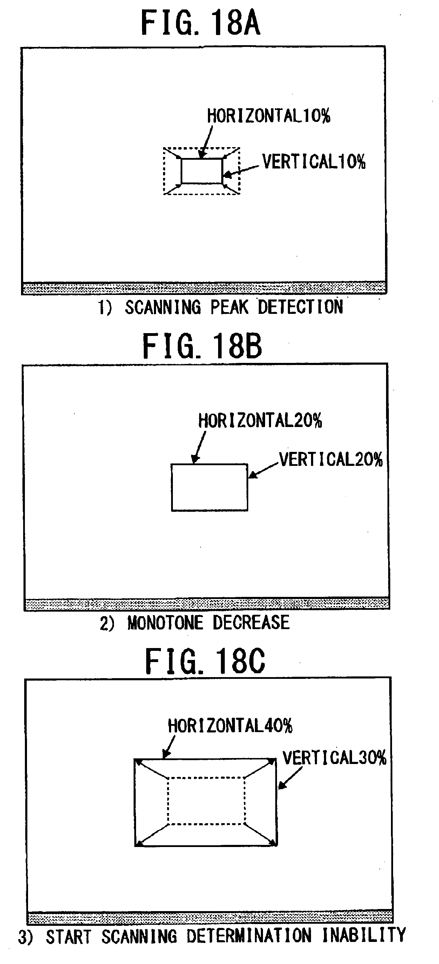

At first, if the peak detection flag is ON in the start scanning process (6-2) (YES in 16-1), the size of the AF area is set to be a size smaller than a normal size of an AF area illustrated in FIG. 18A (16-2). The size of the AF area smaller than the normal size is a size 10% in horizontal and 10% in vertical, for example. If the peak detection flag is not ON (NO in 16-1) and the monotone lowering flag is ON (YES in 16-4), the AF area is set to a normal size which is the same as that in the start scanning as illustrated in FIG. 18B (16-5).

If the peak detection flag is not ON (NO in 16-1) and the monotone lowering flag is not ON (No in 16-4), it is determined that the environment of the subject is low contrast (low brightness), and the AF area larger than a standard area is set as illustrated in FIG. 18C. The expanded area is 40% in horizontal and 30% in vertical, for example (18-6).

If the peak is detected as described above, the peak position can be detected by using the smaller area. In the monotone lowering, it is difficult to determine the scanning, so that the area is set to the same area as that in the start scanning. In the low contrast, the area is expanded because the subject may not be covered by the area in the start scanning.

The finally selected area is set (16-3), and the process is completed. The above is the AF area setting process in this embodiment. As described above, the feature of the present embodiment is to achieve the highly accurate AF scanning by selecting the size of the AF area according to the subject.

After the size of the AF area is set in the above-described AF area setting process (15-1), the operation waits for the detection of the falling of the VD signal (15-2). After detecting the falling of the VD signal, a predetermined pulse rate is set in the focus speed setting processor (15-3). The focus speed setting process (15-3) will be described with reference to the flow chart in FIG. 14. At first, it is confirmed whether or not the present position of the focus lens 7-2a is a start position or more determined in the above-described start scanning process (6-2) (14-1). In this case, the position of the focus lens 7-2a is indicated by a value which is increased if the position of the focus lens approaches the close side with infinity as 0. That is, it is determined whether the present position is located in the side farther than the start position. If the present position is located in the side farther than the start position (YES in 14-1), it is confirmed whether or not any detection is conducted in the start scanning process (6-2). As the confirmation target, it is confirmed whether or not the peak is detected or whether or not the monotone lowering is detected.

If the detection of the start scanning is performed (YES in 14-2), it is confirmed whether the detection result is the peak detection or not (14-3). If it is the peak detection (YES in 14-3), namely, if the peak detection flag is ON in the start scanning process, and the focal length is shorter than Mean (YES in 14-4), the pulse rate of the focus lens 7-2a is set to 50 pps (14-5). If the peak detection flag is ON, and the focal length is Mean or more (NO in 14-4), the pulse rate of the focus lens 7-2a is set to 100 pps (14-8).

Next, if the detection of the start scanning is not performed (NO in 14-2) or the detection of the start scanning is performed (YES in 14-2) and the monotone lowering flag is ON, which is not the peak detection, (NO in 14-3), and the focal length is shorter than Mean (YES in 14-7), the pulse rate of the focus lens 7-2a is set to 100 pps (14-8).

If the detection of the start scanning is not performed (NO in 14-2), or the detection of the start scanning is performed (YES in 14-2) and the monotone lowering flag is ON, which is not the peak detection, (NO in 14-3), and the focal length is Mean or more (NO in 14-7), the pulse rate of the focus lens 7-2a is set to 500 pps (14-9).

Next, if the present position is smaller than the start position, namely, the present position is located in the side closer than the start position (NO in 14-1), the focal length is shorter than Mean (YES in 14-10), and the detection of the start scanning is performed (YES in 14-11), the pulse rate of the focus lens 7-2a is set to 100 pps (14-2). The present position is smaller than the start position, namely, the present position is located in the side closer than the start position (NO in 14-1), the focal length is shorter than Mean (YES in 14-10) and the detection of the start scanning is not conducted (NO in 14-11), the pulse rate of the focus lens 7-2a is set to 500 pps (14-14).

When the focal length is Mean or more (NO in 14-1) and the detection of the start scanning is performed (YES in 14-13), the pulse rate of the focus lens 7-2a is set to 500 pps (14-4). If the focal length is Mean or more (No in 14-10) and the detection of the start scanning is not performed (NO in 14-13), the pulse rate of the focus lens 7-2a is set to 1000 pps (14-15).

As described above, by changing the pulse rate so as to decrease the driving speed to the start position when the result of the start scanning and the focal length is the peak detection and increase in the driving speed to the start position when the peak is not detected, the AF speed can be increased because the time to reach the peak position can be improved.

The focus detection after the start position in the AF scanning is finely adjusted by setting a pulse rate to a low pulse rate when the peak is detected, so that the AF accuracy is improved. In the monotone lowering, the pulse rate is set faster than that, and the driving is conducted to improve the speed and accuracy. Under a low contrast environment, for example, it is determined that there is no peak position in the circumference of that position, and the driving is performed at a pulse rate faster than in the peak detection and the monotone lowering, so as to increase the speed.

In this case, the acceleration and deceleration (through-up and through-down) when actually changing the pulse rate of the focus lens 7-2a are important. As described in Embodiment 1, this embodiment considers that the decrease degree does not become significant when setting the pulse rate in the focus detection after the start position to a pulse rate lower than the pulse rate of the focus lens 7-2a when moving to the start position. This is specifically important when using a heavy lens using a DC motor although the focus driving using the pulse motor is conducted. The present invention can be used for such a heavy lens.

As described above, the feature of the present embodiment is to improve the AF speed and accuracy relative to various subjects by confirming the environment of the subject from the result of the start scanning, and largely increasing in speed by changing the pulse rate according to the environment of the subject or decreasing in speed for improving the accuracy.

Next, back to FIG. 15, the focus motor 7-2b is driven by the pulse rate set in the AF focus driving speed setting process (15-3), and the focus lens 7-2a is moved (15-4). The picture signal is obtained while moving the focus lens 7-2a, and the AF evaluation value is calculated by the image data based on the picture signal (15-5). Next, the smooth differential calculation process (15-6) is conducted by this AF evaluation value. In the smooth differential calculation process of the AF evaluation value, as described above, where the AF evaluation value obtained based on the image data of the subject loaded at a predetermined timing from the moving focus lens 7-2a is X [0], and the AF evaluation value obtained ahead of the X [0] by a-number is X [-a], and the AF evaluation value obtained behind of X [0] by $\alpha$-number is X [a], when the weight coefficient relative to each AF evaluation value is set to b1, b2, etc, the smooth differential value Y [0] can be obtained by the following equation, similar to Embodiment 1.

$$Y[0] = \Sigma \, [i=0 \rightarrow a] \, (X[i] - X[-i]) \times bi$$

The extreme value of the AF evaluation value is specified by obtaining the above smooth differential value according to the correlativity of the AF evaluation value obtained in accordance with the movement of the focus lens 7-2a, and the focused position is detected. In the above equation, the smooth differential calculation is conducted by using three AF evaluation values, but the number of AF evaluation values is not limited to three.

Since a plurality of AF evaluation values is required for obtaining the smooth differential value, in the AF evaluation value obtaining timing just after the start of the focus position detection process and just before the driving end range of the focus lens 7-2a, the smooth differential calculation can not be performed. Accordingly, the smooth differential calculation process is conducted after obtaining the number of AF evaluation values which can start the smooth differential calculation after starting the focus position detection process or the smooth differential calculation process is conducted by estimating the AF evaluation value required for the smooth differential calculation with the already obtained AF evaluation value and interpolating the estimated AF evaluation value.

In the above focal position detection process, the AF evaluation value obtained in synchronization with the VD signal and the smooth differential value calculated based on the AF evaluation value are used. Since the smooth differential value in this embodiment is similar to the smooth differential value in Embodiment 1, the detail thereof will be omitted.

Referring to FIG. 15, the peak position detection process is conducted by the smooth differential calculation value (15-7). This is a process which detects a point in which the symbol of the smooth differential value turns over. It is determined whether or not the peak is detected in the peak position detection process (15-8). When the peak is not detected (YES in 15-8), it is determined whether or not the present position of the focus lens 7-2a reaches the end position (15-9). If it the position does not reach the end position (YES in 15-9), the flow goes back to VD signal (15-2), and the detection is again conducted. If the peak is detected in the peak position detection process (NO in 15-8), the focus position detection process is completed.

Back to FIG. 6, if the focus position detection process is completed, the focused position determination process (6-4), and the movement process to the focused position (6-5) are conducted, and the AF process by the imaging device is competed. Since the specific examples of the focused position determination process (6-4) and the movement process to the focused position (6-5) are the same as the processes described in Embodiment 1, the detailed description thereof will be omitted.

According to the above-described Embodiment 2, the AF evaluation value is obtained while moving the shooting lens toward the focus detection operation start position, to confirm the subject condition. Consequently, the AF process can be accurately performed at high speed by changing the pulse rate around the start position or changing the AF area in the subsequent focal position detection process. Some lens barrel units have a large driving range, move slowly, and use a DC motor as a driving source. The present invention can be effective for these lens barrels.

The imaging device and the imaging method can be applicable not only to a digital camera but also to various cameras such as a camera incorporated into a cell phone. According to the above-described imaging device and the imaging method, the time required for autofocus can be reduced, so that a photo opportunity can be prevented from being missed.

According to the above embodiments, the AF evaluation values are calculated from the image data at the same time that the shooting lens is moved to the focus detection operation start position, and the start position of the autofocus detection is determined, and the setting of the pulse rate of the focus driving and the size of the AF area are set according to the determined start position, so that the AF process can be accurately performed at high speed. Although the embodiments of the present invention have been described above, the present invention is not limited thereto. It should be appreciated that variations may be made in the embodiments described by persons skilled in the art without departing from the scope of the present invention.

**Claims**

1. An imaging device, comprising:

   an imaging element (101) configured to receive light from a subject through an imaging lens;
   a lens driver (7-5) configured to move the imaging lens; and
   an autofocus detector (108) configured to determine a focal point using image data obtained from the imaging element,
   wherein the autofocus detector (108) includes:

   a start position determination section (108-1) configured to calculate an AF evaluation value from the image data obtained at predetermined time intervals while the lens driver moves the imaging lens toward a virtual start position, the virtual start position is a start position determined in a previous step, and to determine a start position of autofocus detection based on the calculated AF evaluation value; and
   a focus detection setting changing section (108-4); **characterized in that**:

   the focus detection setting changing section (108-4) sets a movement speed of the imaging lens while moving the lens towards a new virtual start position to be faster than that in a case in which a peak position is detected when the AF evaluation value, calculated by the start position determination section while moving the imaging lens, monotonically lowers.

2. The imaging device according to Claim 1, wherein the start position determination section determines the start position of the autofocus detection based on an increase and decrease of the AF evaluation value.

3. The imaging device according to Claim 1 or 2, wherein the focus detection setting changing section decreases a moving speed of the imaging lens in the lens driver when a peak position is detected while moving the imaging lens.

4. The imaging device according to any one of Claims 1 to 3, wherein the focus detection setting changing section sets a movement speed of the imaging lens in the lens driver faster than that in a case in which the AF evaluation value, obtained while moving the imaging lens, monotonically lowers when the start position determination section does not detect a peak position by the AF evaluation value calculated while moving the imaging lens or it is not determined that the AF evaluation value calculated while moving the imaging lens monotonically lowers.

5. An imaging method, comprising:

   an autofocus detection step after receiving light of a subject by an imaging element (101) through an imaging lens and determining a focal point by the image data obtained from the imaging element;
   an AF evaluation value calculation step for calculating an AF evaluation value from the image data obtained at predetermined time intervals when moving the imaging lens toward the determined focal position;
   a start position determination step for determining a start position of the autofocus detection based on the calculated AF evaluation value from the image data obtained at predetermined time intervals while moving the imaging lens towards a virtual start position, the virtual start position is a start position of the lens determined in a previous step used to determine a start position of autofocus detection based on the calculated AF evaluation value; and
   a focus detection setting changing step for setting a movement speed of the imaging lens while moving the imaging lens towards a virtual position to be faster than that in a case in which a peak position is detected when the AF evaluation value, calculated while moving the imaging lens, monotonically lowers.


**Patentansprüche**

1. Abbildungsvorrichtung, die aufweist:

   ein Abbildungselement (101), das konfiguriert ist, um Licht von einem Gegenstand durch eine Abbildungslinse zu empfangen;
   einen Linsentreiber (7-5), der konfiguriert ist, um die Abbildungslinse zu bewegen; und
   einen Autofokusdetektor (108), der konfiguriert ist, um einen Brennpunkt unter Verwendung von Bilddaten zu bestimmen, die von dem Abbildungselement erhalten wurden,

wobei der Autofokusdetektor (108) einschließt:

einen Startpositionsbestimmungsabschnitt (108-1), der konfiguriert ist, um einen AF-Auswertungs-Wert von den Bilddaten zu berechnen, die bei vorbestimmten Zeitintervallen erhalten wurden, während der Linsentreiber die Abbildungslinse zu einer virtuellen Startposition bewegt, wobei die virtuelle Startposition eine Startposition ist, die in einem vorherigen Schritt bestimmt ist, und um eine Startposition einer Autofokusdetektion zu bestimmen, und zwar basierend auf dem berechneten AF-Auswertungs-Wert; und einen Fokusdetektionseinstelländerungsabschnitt (108-4), **dadurch gekennzeichnet, dass**:

der Fokusdetektionseinstelländerungsabschnitt (108-4) eine Bewegungsgeschwindigkeit der Abbildungslinse einstellt während die Linse zu einer neuen virtuellen Startposition bewegt wird, um schneller zu sein, als in einem Fall, in welchem eine Spitzenposition bzw. Hauptposition oder Maximalposition detektiert ist, wenn der AF-Auswertungs-Wert, der durch den Startpositionsbestimmungsabschnitt bestimmt wurde, während die Abbildungslinse bewegt wird, monoton kleiner wird bzw. monoton fällt.

2. Abbildungsvorrichtung nach Anspruch 1, wobei der Startpositionsbestimmungsabschnitt die Startposition der Autofokusdetektion bestimmt, und zwar basierend auf einem Ansteigen und Abfallen des AF-Auswertungs-Wert.

3. Abbildungsvorrichtung nach Anspruch 1 oder 2, wobei der Fokusdetektionseinstelländerungsabschnitt eine Bewegungsgeschwindigkeit der Abbildungslinse in dem Linsentreiber senkt bzw. verringert, wenn eine Spitzenposition bzw. Hauptposition oder Maximalposition detektiert ist, während die Abbildungslinse bewegt wird.

4. Abbildungsvorrichtung nach irgendeinem der Ansprüche 1 bis 3, wobei der Fokusdetektionseinstelländerungsabschnitt eine Bewegungsgeschwindigkeit der Abbildungslinse in dem Linsentreiber schneller einstellt bzw. schneller zu sein als in einem Fall in welchem der AF-Auswertungs-Wert, der während der Bewegung der Abbildungslinse erhalten wurde, monoton kleiner wird bzw. abfällt, wenn der Startpositionsbestimmungsabschnitt eine Spitzenposition bzw. Hauptposition oder Maximalposition nicht detektiert, und zwar durch den AF-Auswertungs-Wert, der während der Bewegung der Abbildungslinse berechnet wurde oder es nicht bestimmt ist, dass der AF-Auswertungs-Wert, der während die Abbildungslinse bewegt wird monoton kleiner wird bzw. sinkt oder abfällt.

5. Abbildungsverfahren, aufweisend:

einen Autofokusdetektionsschritt nach einem Empfangen von Licht eines Gegenstandes durch ein Abbildungselement (101), und zwar durch eine Abbildungslinse und einem Bestimmen eines Brennpunktes durch die Bilddaten, die von dem Abbildungselement erhalten wurden;
einen AF-Auswertungs-Wert-Berechnungsschritt zum Berechnen eines AF-Auswertungs-Wertes von den Bilddaten, die bei vorbestimmten Zeitintervallen erhalten wurden, wenn die Abbildungslinse zu der bestimmten Fokusposition bzw. Fokallage oder dem bestimmten Brennpunkt bewegt wird;
einen Startpositionsbestimmungsschritt zum Bestimmen einer Startposition der Autofokusdetektion, und zwar basierend auf dem berechneten AF-Auswertungs-Wert, und zwar von den Bilddaten, die bei vorbestimmten Zeitintervallen erhalten wurden, während die Abbildungslinse zu einer virtuellen Startposition bewegt wird, wobei die virtuelle Startposition eine Startposition der Linse ist, die in einem vorherigen Schritt bestimmt wurde, der verwendet wird, um eine Startposition einer Autofokusdetektion basierend auf dem berechneten AF-Auswertungs-Wert zu bestimmen; und
einen Fokusdetektionseinstelländerungsschritt zum Einstellen einer Bewegungsgeschwindigkeit der Abbildungslinse, und zwar während der Bewegung der Abbildungslinse zu einer virtuellen Position, um schneller zu sein als in einem Fall in welchem eine Spitzenposition bzw. Hauptposition oder Maximalposition detektiert ist, wenn der AF-Auswertungs-Wert, der während der Bewegung der Abbildungslinse berechnet wurde, monoton kleiner wird bzw. monoton fällt.

**Revendications**

1. Dispositif d'imagerie, comprenant :

un élément d'imagerie (101) configuré pour recevoir de la lumière en provenance d'un sujet à travers une lentille d'imagerie ;
un dispositif d'entraînement de lentille (7-5) configuré pour déplacer la lentille d'imagerie ; et

un détecteur de mise au point automatique (108) configuré pour déterminer un point focal en utilisant des données d'image obtenues à partir de l'élément d'imagerie,
dans lequel le détecteur de mise au point automatique (108) comprend :

une section de détermination de position de départ (108-1) configurée pour calculer une valeur d'évaluation AF à partir des données d'image obtenues à des intervalles de temps prédéterminés pendant que le dispositif d'entraînement de lentille déplace la lentille d'imagerie vers une position de départ virtuelle, la position de départ virtuelle est une position de départ déterminée lors d'une étape précédente, et pour déterminer une position de départ de détection de mise au point automatique sur la base de la valeur d'évaluation AF calculée ; et
une section de changement de réglage de détection de mise au point (108-4), **caractérisée en ce que** :

la section de changement de réglage de détection de mise au point (108-4) règle une vitesse de déplacement de la lentille d'imagerie pendant le déplacement de la lentille vers une nouvelle position de départ virtuelle pour être plus rapide que celle dans un cas où une position de crête est détectée lorsque la valeur d'évaluation AF, calculée par la section de détermination de position de départ pendant le déplacement de la lentille d'imagerie, baisse monotonement.

2. Dispositif d'imagerie selon la revendication 1, dans lequel la section de détermination de position de départ détermine la position de départ de la détection de mise au point automatique sur la base d'une augmentation et d'une diminution de la valeur d'évaluation AF.

3. Dispositif d'imagerie selon la revendication 1 ou 2, dans lequel la section de changement de réglage de détection de mise au point diminue une vitesse de déplacement de la lentille d'imagerie dans le dispositif d'entraînement de lentille lorsqu'une position de crête est détectée pendant le déplacement de la lentille d'imagerie.

4. Dispositif d'imagerie selon l'une quelconque des revendications 1 à 3, dans lequel la section de changement de réglage de détection de mise au point règle une vitesse de déplacement de la lentille d'imagerie dans le dispositif d'entraînement de lentille plus rapide que celle dans un cas où la valeur d'évaluation AF, obtenue pendant le déplacement de la lentille d'imagerie, baisse monotonement lorsque la section de détermination de position de départ ne détecte pas une position de crête par la valeur d'évaluation AF calculée pendant le déplacement de la lentille d'imagerie ou il n'est pas déterminé que la valeur d'évaluation AF calculée pendant le déplacement de la lentille d'imagerie baisse monotonement.

5. Procédé d'imagerie, comprenant :

une étape de détection de mise au point automatique après la réception de lumière d'un sujet par un élément d'imagerie (101) à travers une lentille d'imagerie et déterminant un point focal par les données d'image obtenues à partir de l'élément d'imagerie ;
une étape de calcul de valeur d'évaluation AF pour calculer une valeur d'évaluation AF à partir des données d'image obtenues à des intervalles de temps prédéterminés lors du déplacement de la lentille d'imagerie vers la position focale déterminée ;
une étape de détermination de position de départ pour déterminer une position de départ de la détection de mise au point automatique sur la base de la valeur d'évaluation AF calculée à partir des données d'image obtenues à des intervalles de temps prédéterminés pendant le déplacement de la lentille d'imagerie vers une position de départ virtuelle, la position de départ virtuelle est une position de départ de la lentille déterminée lors d'une étape précédente utilisée pour déterminer une position de départ de détection de mise au point automatique sur la base de la valeur d'évaluation AF calculée ; et
une étape de changement de réglage de détection de mise au point pour régler une vitesse de déplacement de la lentille d'imagerie pendant le déplacement de la lentille d'imagerie vers une position virtuelle pour être plus rapide que celle dans un cas où une position de crête est détectée lorsque la valeur d'évaluation AF, calculée pendant le déplacement de la lentille d'imagerie, baisse monotonement.

# FIG. 1

SW1

SW2

2

3

4

CB

6

7

# FIG. 2

SW1

1

SW2

CB

# FIG. 3

SW2  SW3  SW1

4  9

8

SW4

SW13

SW5

SW7

CB

SW8

13  10  SW12  SW9  SW6  SW11  SW10

# FIG. 4

LENS BARREL UNIT 7

ZOOM OPTICAL SYSTEM 7-1 | FOCUS OPTICAL SYSTEM 7-2 | APERTURE UNIT 7-3 | MECHANICAL SHUTTER UNIT 7-4

ZOOM LENS 7-1A | FOCUS LENS 7-2A | APERTURE 7-3A | MECHANICAL SHUTTER 7-4A

ZOOM MOTOR 7-1B | FOCUS MOTOR 7-2B | APERTURE MOTOR 7-3B | MECHANICAL SHUTTER MOTOR 7-4B

MOTOR DRIVER 7-5

F/E IC (102)

CCD 101 | CDS 102-1 | AGC 102-2 | A/D CONVERTER 102-3

TG 102-4 — VD/HD SIGNALS

SDRAM 103

RAW-RGB IMAGE DATA | YUV IMAGE DATA | JPEG IMAGE DATA

DIGITAL STILL CAMERA PROCESSOR 104

CCD1 SIGNAL PROCESSING BLOCK 104-1

CCD2 SIGNAL PROCESSING BLOCK 104-2

CPU BLOCK 104-3

LOCAL SRAM 104-4

USB BLOCK 104-5 — USB CONNECTOR 122

SERIAL BLOCK 104-6 — SERIAL DRIVER CIRCUIT 123-1 — RS-232C CONNECTOR 123-2

JPEG CODEC BLOCK 104-7

RESIZE BLOCK 104-8

TV SIGNAL DISPLAY BLOCK 104-9 — LCD DRIVER 117 — LCD MONITOR 10

VIDEO AMP 118 — VIDEO JACK 119

MEMORY CARD CONTROLLER BLOCK 104-10 — MEMORY CARD SLOT 121 — MEMORY CARD

RAM 107 — INTERNAL MEMORY 120

STROBE LIGHT EMITTER 3 — STROBE CIRCUIT 114

RANGING UNIT 5

MICROPHONE 115-3 — MICROPHONE AMP 115-2 — SOUND RECORDING CIRCUIT 115-1

SUB LCD 1 — LCD DRIVER 111 — SUB-CPU 109

AF LED 8

STROBE LED 9

REMOTE CONTROLLER RECEIVER 6

BUZZER 113

OPERATION KEY UNIT SW1-13

SPEAKER 116-3 — AUDIO AMP 116-2 — SOUND REPLAY CIRCUIT 116-1

ROM 108

CONTROL PROGRAM

START SCANNING PROCESSOR108-1 | FOCUSED POSITION DETERMINATION PROCESSOR108-3

FOCUS POSITION DETECTION PROCESSOR108-2 | FOCUSED POSITION MOVEMENT PROCESSOR108-4

# FIG. 5

HORIZONTAL20%

VERTICAL20%

# FIG. 6

```
        ┌──────────────┐
        │    START     │
        └──────┬───────┘
               │
6-1            ▼
        ╱────────────────╲        NO
       ╱  RELEASE BUTTON  ╲──────────┐
       ╲     SW1 ON       ╱          │
        ╲────────────────╱           │
               │ YES                 │
6-2            ▼                     │
   ┌───────────────────────┐        │
   │ START SCANNING PROCESS │        │
   └───────────┬───────────┘        │
               │                     │
6-3            ▼                     │
  ┌─────────────────────────────┐   │
  │ FOCUS POSITION DETECTION     │   │
  │         PROCESS              │   │
  └─────────────┬───────────────┘   │
               │                     │
6-4            ▼                     │
 ┌───────────────────────────────┐  │
 │ FOCUSED POSITION DETERMINATION │  │
 │           PROCESS              │  │
 └─────────────┬─────────────────┘  │
               │                     │
6-5            ▼                     │
 ┌───────────────────────────────┐  │
 │ FOCUSED POSITION MOVEMENT      │  │
 │          PROCESS               │  │
 └─────────────┬─────────────────┘  │
               │◄────────────────────┘
               ▼
        ┌──────────────┐
        │    E N D     │
        └──────────────┘
```

# FIG. 7

```
                    ( START )
                        │
                        ▼
7-1 ┌──────────────────────────────────────────┐
    │ VIRTUAL START POSITION SETTING PROCESS    │
    └──────────────────────────────────────────┘
                        │
                        ▼
7-2 ┌──────────────────────────────────────────┐
    │     FOCUS SPEED SETTING PROCESS           │
    └──────────────────────────────────────────┘
                        │
                        ▼
7-3 ┌──────────────────────────────────────────┐
    │        FOCUS DRIVING PROCESS              │
    └──────────────────────────────────────────┘
                        │
                        ▼
7-4 ┌──────────────────────────────────────────┐
    │      VD SIGNAL WAITING PROCESS            │
    └──────────────────────────────────────────┘
                        │
                        ▼
7-5 ┌──────────────────────────────────────────┐
    │ AF EVALUATION VALUE CALCULATION PROCESS   │
    └──────────────────────────────────────────┘
                        │
                        ▼
7-6 ┌──────────────────────────────────────────┐
    │ START POSITION DETERMINATION PROCESS      │
    └──────────────────────────────────────────┘
                        │
                        ▼
7-7             ╱ PRESENT POSITION ≠ ╲    NO
              ◇   VIRTUAL START POSITION  ◇──────┐
                ╲                      ╱         │
                        │ YES                    │
                        ▼                        │
7-8        NO   ╱    DETERMINE     ╲             │
         ┌─────◇   START POSITION    ◇           │
         │       ╲                 ╱             │
         │               │ YES ◄───────────────┘
         │               ▼
         │   7-9 ┌──────────────────────┐
         │       │  FOCUS STOP PROCESS  │
         │       └──────────────────────┘
         │               │
         │               ▼
         │            ( E N D )
         │
         └──────────────►
```

# FIG. 8

START

8-1
FOCAL LENGTH < MEAN

NO

YES

8-2
PULSE RATE←100pps

8-3
PULSE RATE←500pps

E N D

FIG. 9

EP 2 445 194 B1

# FIG. 10

```
            ( START )
                │
    10-1 ───────┤
            ┌────▼──────────────┐
            │   WAIT FOR VD     │
            └────────┬──────────┘
    10-2             │
            ┌────────▼──────────────────┐
            │  AF SPEED SETTING PROCESS │
            └────────┬──────────────────┘
    10-3             │
            ┌────────▼──────────┐
            │   FOCUS DRIVING   │
            └────────┬──────────┘
    10-4             │
            ┌────────▼────────────────┐
            │  OBTAIN EVALUATION VALUE│
            └────────┬────────────────┘
    10-5             │
            ┌────────▼──────────────────────┐
            │ CALCULATE SMOOTH DIFFERENTIAL │
            └────────┬──────────────────────┘
    10-6             │
            ┌────────▼──────────────────────────┐
            │ PEAK POSITION DETECTION PROCESS   │
            └────────┬──────────────────────────┘
    10-7             │
               ◇ NO PEAK DETECTION ◇──── NO
                    │ YES
    10-8            │
               ◇ PRESENT POSITION    ◇──YES
               ◇ ≠ END POSITION      ◇
                    │ NO
                    ▼
                ( END )
```

## FIG. 11A

LV10

AF EVALUATION VALUE

0    5    10    15    20

## FIG. 11B

LV8

AF EVALUATION VALUE

0    2    4    6    8    10    12    14    16    18

## FIG. 12A

## FIG. 12B

## FIG. 13A

1) PEAK DETECTION

## FIG. 13B

2) MONOTONE LOWERING

## FIG. 13C

3) DETERMINATION INABILITY

# FIG. 14

START

14-1 PRESENT POSITION < START POSITION ? — NO

YES 14-2 DETECTION OF START SCANNING ? — NO

YES 14-3 PEAK DETECTION FLAG ON ? — NO

YES

14-7 FOCAL LENGTH<MEAN ? — NO

14-10 FOCAL LENGTH<MEAN ? — NO

YES

YES 14-13 DETECTION OF START SCANNING ? — NO

14-4 FOCAL LENGTH<MEAN ? — NO

YES

14-11 DETECTION OF START SCANNING ? — NO

YES

YES

14-5 50pps

14-8 100pps

14-9 500pps

14-12 100pps

14-14 500pps

14-15 1000pps

SET PULSE RATE 14-6

END

EP 2 445 194 B1

# FIG. 15

```
              ┌──────────────┐
              │    START     │
              └──────┬───────┘
                     ▼
15-1    ┌────────────────────────────┐
        │   AF AREA SETTING PROCESS  │
        └────────────┬───────────────┘
                     ▼
15-2    ┌────────────────────────────┐
        │        WAIT FOR VD         │
        └────────────┬───────────────┘
                     ▼
15-3    ┌────────────────────────────┐
        │  FOCUS SPEED SETTING PROCESS│
        └────────────┬───────────────┘
                     ▼
15-4    ┌────────────────────────────┐
        │   FOCUS DRIVING PROCESS    │
        └────────────┬───────────────┘
                     ▼
15-5  ┌──────────────────────────────────────┐
      │ AF EVALUATION VALUE CALCULATION PROCESS│
      └──────────────┬───────────────────────┘
                     ▼
15-6    ┌────────────────────────────┐
        │ CALCULATE SMOOTH DIFFERENTIAL│
        └────────────┬───────────────┘
                     ▼
15-7    ┌────────────────────────────┐
        │ PEAK POSITION DETECTION PROCESS│
        └────────────┬───────────────┘
                     ▼
15-8          ◇ NO PEAK DETECTION ◇───NO──┐
                     │                     │
                    YES                    │
                     ▼                     │
15-9     ◇ PRESENT POSITION ≠ END POSITION ◇
        YES                    │           │
                              NO◄──────────┘
                               ▼
                       ┌──────────────┐
                       │    E N D     │
                       └──────────────┘
```

## FIG. 16

```
                    ┌──────────────┐
                    │    START     │
                    └──────┬───────┘
                           │
                           ▼
16-1              ╱─────────────────╲        NO
              ╱    PEAK DETECTION    ╲──────────────┐
              ╲      FLAG ON         ╱              │
                ╲─────────────────╱                │
                        │ YES                       ▼
                        │               16-4  ╱─────────────────╲      NO
                        │                 ╱  MONOTONE LOWERING    ╲──────────┐
                        │                 ╲      FLAG ON          ╱          │
                        │                   ╲─────────────────╱             │
                        │                           │ YES                    │
                        │                           ▼          16-5          │
                        │                 ┌──────────────────────┐           │
                        │                 │  SELECT NORMAL AREA   │           │
                        │                 └──────────┬───────────┘           │
16-2                    │                            │                   16-6 ▼
      ┌─────────────────▼──┐                         │       ┌──────────────────────────┐
      │ SELECT SMALL AREA  │                         │       │ SELECT LOW CONTRAST AREA  │
      └─────────┬──────────┘                         │       └────────────┬─────────────┘
16-3            │                                    │                    │
                ▼◄──────────────────────────────────┴────────────────────┘
      ┌────────────────────┐
      │      SET AREA       │
      └─────────┬──────────┘
                ▼
      ┌────────────────────┐
      │      E N D          │
      └────────────────────┘
```

29

# FIG. 17A

1) THROUGH-UP

# FIG. 17B

2) THROUGH-DOWN

# FIG. 18A

HORIZONTAL10%

VERTICAL10%

1) SCANNING PEAK DETECTION

# FIG. 18B

HORIZONTAL20%

VERTICAL20%

2) MONOTONE DECREASE

# FIG. 18C

HORIZONTAL40%

VERTICAL30%

3) START SCANNING DETERMINATION INABILITY

# FIG. 19

(a) VD

(b) BUS

(c) EXPOSURE

(d) FOCUS
50pps

(e) 100pps

(f) 500pps

(g) 1000pps

# FIG. 20A

ROM108

| START SCANNING PROCESSOR (108-1) | FOCUSED POSITION DETERMINATION PROCESSOR (108-3) |
|---|---|
| FOCUS POSITION DETECTION PROCESSOR (108-2) | FOCUSED POSITION MOVEMENT PROCESSOR (108-4) |

# FIG. 20B

FOCUS POSITION DETECTION PROCESSOR (108-2)

| AF DRIVING SPEED SETTING PROCESSOR (108-21) | AF AREA SETTING PROCESSOR (108-22) |
|---|---|

**EP 2 445 194 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3851027 B
- JP 2008058559 A
- US 20040130648 A1